(19) Europäisches Patentamt
European Patent Office
Office européen des brevets

(11) **EP 1 245 817 A2**

(12) **EUROPEAN PATENT APPLICATION**

(43) Date of publication:
**02.10.2002 Bulletin 2002/40**

(51) Int Cl.[7]: **F02D 41/40**, F02D 41/02

(21) Application number: **02007089.2**

(22) Date of filing: **27.03.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.03.2001 JP 2001102552**
**30.03.2001 JP 2001100576**

(71) Applicant: **Mazda Motor Corporation**
**Aki-gun, Hiroshima 730-8670 (JP)**

(72) Inventors:
• **Kondou, Terunori**
**Aki-gun, Hiroshima 730-8670 (JP)**

• **Saito, Tomoaki**
**Aki-gun, Hiroshima 730-8670 (JP)**
• **Shouya, Taizou**
**Aki-gun, Hiroshima 730-8670 (JP)**
• **Kobayashi, Akihiro**
**Aki-gun, Hiroshima 730-8670 (JP)**

(74) Representative: **Müller-Boré & Partner**
**Patentanwälte**
**Grafinger Strasse 2**
**81671 München (DE)**

(54) **Apparatus for and method of purifying exhaust gas and method of injecting fuel for diesel engine**

(57) In an exhaust gas purifying apparatus disposed in an exhaust passage of a diesel engine, an NOx trap catalyst is filled. The NOx trap catalyst uses an NOx absorber which absorbs NOx in an atmosphere with an excess oxygen while releasing the absorbed NOx when the concentration of oxygen is lowered. In the engine, a main injection is executed near a top dead center of a compression stroke. Meanwhile, a post injection is executed in such a manner that the fuel injected by the post injection is burned near such timing that a diffusion combustion of the fuel injected by the main injection ends in an expansion stroke after the main injection. By executing the post injection, the concentration of $O_2$ in the exhaust gas can be lowered and the concentration of HC can be suitably elevated while lowering production of soot.

Fig.1

EP 1 245 817 A2

**Description**

BACKGROUND OF THE INVENTION

FIELD OF THE INVENTION

The present invention relates to an apparatus for and a method of purifying exhaust gas for a diesel engine, and a method of injecting fuel for the diesel engine.

DESCRIPTION OF PRIOR ART

In general, since air pollutants such as NOx (nitrogen oxide), CO (carbon monoxide), HC (hydro carbon) and the like are contained in an exhaust gas discharged from a diesel engine for a vehicle, an exhaust gas purifying apparatus using an exhaust gas purifying catalyst is provided in an exhaust passage in order to purify the air pollutants. However, in order to purify NOx, it must be reduced. Therefore, it is not easy to purify NOx by means of a normal exhaust gas purifying catalyst (for example, three-way catalyst) as to the diesel engine in which the concentration of $O_2$ (oxygen) in the exhaust gas often becomes higher.

Meanwhile, the engine is generally provided with an EGR device for lowering the amount of produced NOx by recirculating a part of the exhaust gas into the air intake system as EGR in correspondence with its driving state so as to lower the combustion temperature of the fuel. However, because it is impossible to make the amount of produced NOx zero by means of the EGR device, NOx in the exhaust gas must be still purified.

Thus, in recent years, there has been prevailing an NOx trap catalyst (exhaust gas purifying catalyst) using an NOx absorber which absorbs NOx when the concentration of $O_2$ in the exhaust gas becomes higher, while releasing the absorbed NOx when the concentration of $O_2$ becomes lower (for example, see Japanese Laid-open Patent Publication No. 2000-170585). In the NOx trap catalyst described above, NOx which is released from the NOx absorber when the concentration of $O_2$ in the exhaust gas is lower, is reduced (deoxidized) to become $N_2$ by utilizing HC in the exhaust gas as a reducing agent.

Accordingly, in the case that the diesel engine is provided with the NOx trap catalyst, in order to effectively purify NOx, it is necessary that the exhaust gas suitably becomes such a condition that it has a lower $O_2$ concentration and includes adequate HC so as to release NOx from the NOx absorber. However, if the driving state of the diesel engine is set to the above-mentioned state by increasing the amount of the main injection or simply executing a post injection etc. in the expansion stroke in addition to the main injection, soot (smoke) may be often produced. Thus, when the amount of soot is larger, there occurs such a problem that the exhaust gas purifying apparatus may be blocked up.

Meanwhile, conventionally, there has been also known such a diesel engine (direct injection diesel engine) that fuel is directly injected into its combustion chamber. In the above-mentioned diesel engine, a main injection of the fuel is executed near the top dead center of the compression stroke while a post injection (or sub injection) is executed at a predetermined period in the former half of the expansion stroke after the main injection has been executed. For example, in Japanese Laid-open Patent Publication No. 2000-170585, there is described such a diesel engine that the main injection of the fuel is executed near the top dead center of the cömpression stroke while the post injection (sub injection) is executed at the period of ATDC (after top dead center) 10-20° CA (crank angle).

In the diesel engine, because the temperature of the exhaust gas is relatively lower, there exists such a problem that it is hard to activate the catalyst device in the exhaust system. Accordingly, in the conventional engine, the temperature of the exhaust gas is elevated by the post combustion by executing the post injection in the expansion stroke so as to promote the activation of the catalyst when the temperature is lower. Meanwhile, in the case that the engine is provided with an NOx reduction catalyst, in order to increase the amount of supply of HC acting as the reducing agent, the post injection of the fuel is executed in the expansion stroke so that the amount of HC is increased by the post combustion. On that occasion, there may exist such a subject that the NOx purifying ratio must be improved while restraining overheat of the catalyst device, and such another subject that the amount of release of soot which is composed of coagulation of carbon particles produced in the combustion chamber, must be lowered. Thus, it is required to solve the above-mentioned subjects while restraining increase of HC and deterioration of the fuel performance. In the engine described in Japanese Laid-open Patent Publication No. 2000-170585, by executing the post injection at the period of ATDC 10-20° CA (crank angle), the amount of soot is lowered while restraining deterioration of the fuel performance.

However, in the diesel engine according to the prior art, the period of the post injection is fixed. Therefore, the condition for effectively purifying NOx or lowering the amount of soot, which changes in accordance with the driving state of the engine, may deviate from the suitable condition. In consequence, the amount of release of NOx or soot may not be effectively lowered. In particular, in such a case that the amount of supply of HC acting as the reducing agent for the NOx reduction catalyst or NOx trap catalyst is intended to be further increased by the post injection, or such a case that HC is intended to be increased in order to judge deterioration of the oxidation catalyst, HC can not be effectively increased easily and effectively in the engine according to the above-mentioned prior art.

SUMMARY OF THE INVENTION

The present invention, which has been achieved to solve the conventional problems described above, has an object to provide an apparatus for or a method of purifying an exhaust gas of a diesel engine, which can lower the concentration of $O_2$ in the exhaust gas and suitably elevate the concentration of HC in the exhaust gas while lowering the production of soot when an NOx trap catalyst is used to purify NOx in the exhaust gas, and which can easily release NOx from an NOx absorber to effectively purify the NOx. Further, the present invention has another object to provide a method of injecting the fuel in the diesel engine, which can easily and effectively increase the amount of HC in accordance with the demand therefor.

An apparatus for purifying an exhaust gas of a diesel engine according to the present invention, which has been achieved to solve the above-mentioned problems, includes a fuel injector for injecting a fuel into a combustion chamber. The apparatus also includes a main injection device for executing a main injection (including multistage injection) by causing the fuel injector to inject the fuel near a top dead center of a compression stroke. Further, the apparatus includes a post injection device for executing a post injection (including multistage injection) by causing the fuel injector to inject the fuel on the basis of a timing (i.e. such timing that heat generation becomes nearly 0 or lower than 0) at which a combustion (diffusion combustion) of the fuel injected by the main injection (hereinafter, referred to "main injection fuel") ends within a predetermined period in an expansion stroke after the main injection has been executed (or in a predetermined period between the main injection and the expansion stroke). In addition, the apparatus includes an NOx absorber which absorbs NOx under an atmosphere with an excess oxygen while releasing the absorbed NOx when a concentration of oxygen is lowered. The NOx absorber is disposed in an exhaust passage. The apparatus is characterized in that the post injection device executes the post injection when the absorbed NOx is released from the NOx absorber.

In the diesel engine, generally, soot is often produced due to combustion of the main injection fuel. However, the present inventors have experimentally found such a fact that in the diesel engine, the amount of soot (smoke) becomes very smaller, if the post injection is executed in such a period that the diffusion combustion of the main injection fuel ends, namely such a period that the heat generation becomes nearly 0 or lower than 0. Thus, in the exhaust gas purifying apparatus of the diesel engine according to the present invention, the post injection is executed on the basis of such timing that the diffusion combustion of the main injection fuel ends, for example, the timing just after the diffusion combustion of the main injection fuel has ended. Accordingly, the amount of produced soot may be lowered when the post injection is executed in order to release the NOx which has been absorbed by the NOx absorber. Therefore, by suitably executing the post injection, the concentration of $O_2$ in the exhaust gas is lowered and further the concentration of HC is suitably elevated, while lowering the produced soot. In consequence, the NOx can be easily released from the NOx absorber so that the NOx can be effectively purified.

In the exhaust gas purifying apparatus of the diesel engine according to the present invention, it is preferable that the post injection device executes the post injection while setting the injection amount thereof to a value equal to or larger than a predetermined value so as to increase HC. In this case, on the occasion that the NOx is released from the NOx absorber, HC which acts as a reducing agent, can be sufficiently supplied while lowering the amount of produced soot. Therefore, the performance for reducing the NOx or purifying the NOx may be improved.

In the exhaust gas purifying apparatus of the diesel engine according to the present invention, it is preferable that the ratio of the amount of the fuel injected by the post injection to the sum of the amount of the fuel injected by the main injection (hereinafter, referred to "main injection amount") and the amount of the fuel injected by the post injection (hereinafter, referred to "post injection amount") is equal to or larger than 20 %. In this case, on the occasion that the NOx is released from the NOx absorber, HC which acts as a reducing agent, can be more sufficiently supplied while lowering the amount of produced soot. Therefore, the performance for reducing the NOx or purifying the NOx may be further improved.

In the above-mentioned exhaust gas purifying apparatus of the diesel engine, it is preferable that the post injection device executes the post injection for releasing the NOx from the NOx absorber in such a driving state that an engine speed is equal to or smaller than a predetermined speed (low rotation) and/or an engine load is equal to or smaller than a predetermined load (low load). In general, HC has a tendency to remain in the exhaust passage in the low rotation region, the low load region or the low rotation and low load region. However, in this case, HC which acts as a reducing agent, can be sufficiently supplied. Therefore, the performance for reducing the NOx or purifying the NOx may be further improved.

It is preferable that the exhaust gas purifying apparatus of the diesel engine according to the present invention further includes a fresh air reducing device which reduces a fresh air amount (amount of intake air) when the NOx is released. In this case, on the occasion that the NOx is released from the NOx absorber, the concentration of $O_2$ can

be more effectively lowered so that the performance for reducing the NOx or purifying the NOx may be further improved.

In the case that the diesel engine is provided with a turbo supercharger (VGT) in which a supercharging pressure is adjustable, it is preferable that the fresh air reducing device reduces the fresh air amount by causing the turbo supercharger to reduce the supercharging pressure. In this case, on the occasion that the NOx is released from the NOx absorber, the concentration of $O_2$ can be much more effectively lowered so that the performance for reducing the NOx or purifying the NOx may be much more improved. Further, in the case that the diesel engine is provided with the turbo supercharger, the amount of produced soot may be lowered because there is obtained such a function that the performance to utilize the air is improved.

According to the present invention, there is provided a method of purifying an exhaust gas for a diesel engine having a fuel injector for injecting a fuel into a combustion chamber, and an NOx absorber disposed in an exhaust passage which absorbs NOx under an atmosphere with an excess oxygen while releasing the absorbed NOx when a concentration of oxygen is lowered. In the diesel engine, a main injection is executed by causing the fuel injector to inject the fuel near a top dead center of a compression stroke. Hereupon, the method includes the step of setting a timing at which a combustion of the fuel injected by the main injection ends in an expansion stroke. The method also includes the step of executing a post injection by causing the fuel injector to inject the fuel on the basis of the timing which has been set in the setting step, when the NOx is released from the NOx absorber.

In the method of purifying the exhaust gas for the diesel engine, the post injection is executed on the basis of such timing that the diffusion combustion of the main injection fuel ends. Accordingly, the amount of produced soot may be lowered when the post injection is executed in order to release the NOx which has been absorbed by the NOx absorber. Therefore, by suitably executing the post injection, the concentration of $O_2$ in the exhaust gas is lowered and further the concentration of HC is suitably elevated, while lowering the produced soot. In consequence, the NOx can be easily released from the NOx absorber so that the NOx can be effectively purified.

According to the present invention, there is provided a method of injecting a fuel for a diesel engine having a fuel injector for directly injecting a fuel into a combustion chamber. In the diesel engine, a main injection is executed by causing the fuel injector to inject the fuel in a predetermined period from an intake stroke to a top dead center of a compression stroke. Meanwhile, a post injection is executed by causing the fuel injector to inject the fuel in a predetermined period in a former half of the expansion stroke after the main injection on the basis of a timing at which a combustion of the fuel injected by the main injection ends. The method includes the step of setting a condition (hereinafter, referred to "reducer increasing condition") for increasing a reducing agent (i.e. reducer) in an exhaust gas on the basis of a driving state of the diesel engine. Further, the method includes the step of judging whether the reducer increasing condition is satisfied or not. In addition, the method includes the step of executing the post injection when the reducer increasing condition is satisfied.

In the above-mentioned method of injecting the fuel, the post injection may be executed in such a period (i. e. normal period) that the combustion of the fuel injected by the post injection is started just after the combustion of the fuel injected by the main injection has ended. Hereupon, when the reducer increasing condition is satisfied, the period of the post injection may be retarded in relation to the normal period of the post injection so that the combustion of the fuel injected by the post injection is retarded in relation to the period that the combustion of the fuel injected by the main injection ends.

According to the method, on the basis of the timing, at which the diffusion combustion in the combustion chamber, of the fuel injected by the main injection near the top dead center of the compression stroke ends, the post injection may be executed such that the fuel injected by the post injection is started just after the combustion of the fuel injected by the main injection has ended. In consequence, in such a state that carbon in the combustion chamber is well mixed with the surrounding oxygen after the flame has expanded, the carbon is burned together with the fuel injected by the post injection. Therefore, the amount of produced soot composed of coagulation of carbon may be effectively lowered. In the case that the main injection is a multistage injection in which the main injection is divided into a plurality of divisional injections, also, the combustion is a diffusing combustion. In this case also, the amount of discharged soot may be similarly lowered if the post injection is executed on the basis of the timing, at which the diffusing combustion ends. Meanwhile, in the case that the main injection is executed in the intake stroke, a premixed combustion may occur. In this case also, a part of the fuel is burned by means of the diffusing combustion. Accordingly, the amount of discharged soot may be similarly lowered if the post injection is executed on the basis of the timing, at which the diffusing combustion ends.

Moreover, in the method, the reducer increasing condition for increasing the reducing agent in the exhaust gas is set on the basis of the driving state. Further, when the reducer increasing condition is satisfied, the period of the post injection is retarded in relation to the normal period of the post injection in which the combustion of the post injection fuel is started just after the combustion of the main injection fuel has ended. Thus, the start of the combustion of the post injection fuel is retarded in relation to the timing at which the combustion of the main injection fuel ends. In consequence, the amount of the supplied HC which acts as the reducing agent for the NOx reducing catalyst or NOx trap catalyst, is further increased. Further, the reducing agent (HC) may be easily and effectively increased by executing the post injection in correspondence with the increase of demand for judging the deterioration of the oxidizing catalyst.

In the method of injecting the fuel, it is preferable that when the reducer increasing condition is satisfied, the period of the post injection is retarded by about 10° of crank angle in relation to the normal period of the post injection. In this case, the start of the combustion of the post injection fuel is retarded by 10° of crank angle in relation to the normal timing at which the combustion of the post injection fuel is started just after the diffusing combustion of the main injection fuel has ended. In consequence, the reducing agent may be remarkably increased at least in the low engine speed region or low load region.

In the method of injecting the fuel, it is preferable that a fuel amount of the post injection is equal to or larger than 15 % of a fuel amount of the main injection. In this case, the reducing agent (HC) may be remarkably increased.

In the method of injecting the fuel, it is preferable that when the reducer increasing condition is satisfied, the period of the post injection is retarded in such a state that at least one of an engine speed and an engine load is low. In the state that the engine speed or the engine load is low, the engine is operated in a remarkably leaner state so that the amount of HC is smaller. Therefore, when the engine speed or the engine load is low, it is necessary to increase the amount of the HC by particularly retarding the timing of the post injection for the increase of demand of the reducing agent (HC).

In the method of injecting the fuel, it is preferable that on the occasion that the period of the post injection is retarded when the reducer increasing condition is satisfied, the main injection is divided into a plurality of divisional injections. Hereupon, it is preferable that the interval between the closing timing of the fuel injector and the next opening timing of the fuel injector is set to 0.5-1.0 ms. In this case, the amount of HC may be more remarkably increased by setting the interval to 0.5-1.0 ms, in cooperation with the increase of HC due to the retard of the post injection timing.

The diesel engine may be provided with an NOx reducing catalyst disposed in an exhaust passage, in which a catalytic metal is supported by zeolite, the NOx reducing catalyst having a function for reducing and purifying NOx when the air fuel ratio of the exhaust gas is leaner than the theoretical air fuel ratio. In this case, it is preferable that the reducing agent in the exhaust gas is increased, when the driving state is such that the demand for NOx reduction of the NOx reducing catalyst is large.

The NOx purifying ratio of the NOx reducing catalyst depends on the catalyst temperature. The ratio has a peak in a certain temperature range, for example, in the range of 250-300°C. That is, when the catalyst temperature is in the above-mentioned range, the driving state is such condition that the demand for reducing the NOx is larger. Thus, it is judged whether the driving state is such that the catalyst temperature is in the above-mentioned range. Then, if the catalyst temperature is in the above-mentioned range, the post injection timing is retarded in relation to the normal post injection timing at which the combustion of the post injection fuel is started just after the combustion of the main injection fuel has ended. Thus, the start of the combustion of the post injection fuel is retarded in relation to the timing at which the combustion of the main injection fuel ends. In consequence, the supply of HC which acts as the reducing agent for the NOx reducing catalyst, is much further increased.

The diesel engine may be provided with an NOx trap catalyst disposed in the exhaust passage, which has a catalytic material for reducing and purifying NOx when the air fuel ratio of the exhaust gas is nearly equal to or richer than the theoretical air fuel ratio, and an NOx absorber which releases the NOx when the air fuel ratio is nearly equal to or richer than the theoretical air fuel ratio while absorbing the NOx when the air fuel ratio is leaner than the theoretical air fuel ratio. In this case, it is preferable that the reducing agent in the exhaust gas is increased when the driving state is such that the demand for NOx reduction of the NOx trap catalyst is large.

If the amount of NOx absorbed by the NOx trap catalyst (NOx trapping amount) is large, the amount of released NOx is large when the air fuel ratio is rich, so that the demand for reducing NOx is large. Thus, there is judged whether it is such a driving state that the NOx trapping amount is large, for example, on the basis of the travel distance or travel time. Then, if the NOx trapping amount is large, the post injection timing is retarded in relation to the normal post injection timing at which the combustion of the post injection fuel is started just after the combustion of the main injection fuel has ended. Thus, the start of the combustion of the post injection fuel is retarded in relation to the timing at which the combustion of the main injection fuel ends. In consequence, the supply of HC which acts as the reducing agent for the NOx trap catalyst, is much further increased.

The diesel engine may be provided with an oxidizing catalyst disposed in the exhaust passage, which includes a catalytic metal having an oxidizing function, and a device which judges a deterioration of the oxidizing catalyst when a predetermined monitoring condition is satisfied. In this case, it is preferable that the reducing agent in the exhaust gas is increased when the driving state is such that the condition for judging the deterioration of the oxidizing catalyst is satisfied.

The judgement of the deterioration of the oxidizing catalyst is generally executed in a steady state when the catalyst temperature is low in which the purifying ratio is low. Therefore, the condition to judge the deterioration of the catalyst is set to, for example, such that the catalyst temperature is in a predetermined range of lower temperature side and the driving state is in the steady state. Thus, it is judged whether the condition to judge the deterioration is satisfied or not. Then, if the condition is satisfied, the post injection timing is retarded in relation to the normal post injection timing at which the combustion of the post injection fuel is started just after the combustion of the main injection fuel has ended. Thus, the start of the combustion of the post injection fuel is retarded in relation to the timing at which the combustion of the main injection fuel ends. In consequence, the supply of the reducing agent (HC) may be easily and effectively increased by means of the post injection in correspondence with the demand of increase of HC for judging the deterioration of the oxidizing catalyst.

BRIEF DESCRIPTION OF THE DRAWINGS

Various characteristics and advantages of the present invention will become clear from the following description taken in conjunction with the preferred embodiments with reference to the accompanying drawings throughout which like parts are designated by like reference numerals, in which:

Fig. 1 is a schematic view of a system of a direct injection diesel engine provided with an exhaust gas purifying apparatus and a fuel injection apparatus in accordance with the present invention;
Fig. 2 is a flow chart showing a basic control method of a fuel injection control in the engine shown in Fig. 1;
Figs. 3A to 3C are time charts each showing a change with age of a heat generating rate within a combustion chamber;
Figs. 4A to 4C are graphs each showing a relation between post injection timing and a soot generating amount;
Figs. 5A to 5C are graphs each showing a relation between the post injection timing and a HC amount in an exhaust gas;
Figs. 6A to 6C are graphs each showing a relation between the post injection timing and a fuel consumption rate;
Figs. 7A to 7C are graphs each showing a relation between the post injection timing and an NOx amount in the exhaust gas;
Figs. 8A to 8C are graphs each showing a relation between a post injection rate and the soot generating amount;
Figs. 9A to 9C are graphs each showing a relation between the post injection rate and the HC amount in the exhaust gas;
Figs. 10A to 10C are graphs each showing a relation between the post injection rate and the fuel consumption rate;
Figs. 11A and 11B are flow charts showing a control method of a fuel injection control when NOx is released;
Fig. 12 is a flow chart showing a control method of a VGT control;
Figs. 13A and 13B are graphs showing properties of injection fuel amount maps in which the engine torque and the target torque are used as parameters, and Fig. 13C is a graph showing a property of a change of an amount of post injection fuel for an engine speed;
Fig. 14 is a graph showing a property of a VGT opening map in which the engine torque and the target torque are used as parameters.
Fig. 15 is a flow chart showing a control operation of a fuel injection control according to the second embodiment;
Fig. 16 is a flow chart showing a control operation of a fuel injection control according to the third embodiment;
Fig. 17 is a flow chart showing a control operation of a fuel injection control according to the fourth embodiment; and
Fig. 18 is a flow chart showing an operation for judging a deterioration of a catalyst according to the fourth embodiment.

DESCRIPTION OF PREFERRED EMBODIMENTS

A description will be in particular given below of an embodiment in accordance with the present invention.

(First embodiment)

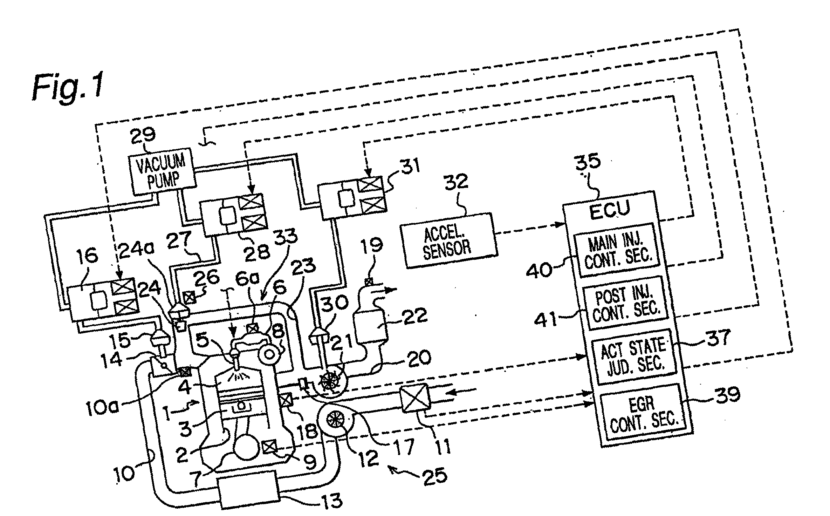

Fig. 1 shows a structure of a diesel engine (hereinafter, refer simply to as an "engine") for a motor vehicle provided with a fuel injection apparatus in accordance with the present invention. As shown in Fig. 1, a main body portion 1 of the engine (hereinafter, refer to as an "engine body 1") has a plurality of cylinders 2 (only one is illustrated), and a piston 3 is fitted and inserted to each of the cylinders 2 so as to freely reciprocate. Further, a combustion chamber 4 is defined within the cylinder 2 by an upper surface of the piston 3. Further, a fuel injector 5 is arranged substantially in a center portion of a ceiling surface of the combustion chamber 4, and the structure is made such that a fuel is directly injected within the combustion chamber 4 from the fuel injector 5 at a predetermined timing. Further, a water temperature sensor 18 for detecting a cooling water temperature (an engine temperature) of engine is provided so as to face to a water jacket (not shown) of the engine body 1.
Each of the fuel injectors 5 is connected to a common rail 6 storing a fuel of high pressure. A pressure sensor 6a for detecting an internal fuel pressure (a common rail pressure) is arranged in the common rail 6, and a high pressure fuel supply pump 8 driven by a crank shaft 7 is connected to the common rail 6. The high pressure fuel supply pump 8 is structured such as to keep a fuel pressure within the common rail 6 detected by the pressure sensor 6a to be not less than about 20 MPa at a time of idling operation, by controlling the supply pressure of the fuel, and to keep it to be not less than 50 MPa at the other operation times.

Further, a crank angle sensor 9 for detecting an angle of rotation is provided in the crank shaft 7. The crank angle sensor 9 is constituted by a detected plate provided in an end portion of the crank shaft 7 and an electromagnetic pickup arranged in an outer peripheral portion so as to oppose thereto, although a detailed description is omitted, and is structured such that the electromagnetic pickup detects a projection portion formed in the outer peripheral portion of the detected plate passing therethrough to output a pulse signal.

A downward end of an intake passage 10 connected to the engine body 1 is branched into sections corresponding to the respective cylinders 2 via a surge tank (not shown), and the branch sections are respectively connected to the combustion chambers 4 of the respective cylinders 2 via respective intake ports. Further, an intake air pressure sensor 10a for detecting a pressure of an intake air supplied within each of the cylinders 2 is provided in the serge tank.

The intake passage 10 is provided with an air flow sensor 11 for detecting an intake air flow amount sucked within the engine body 1, a blower 12 driven by a turbine 21 described later and compressing the intake air, an inter cooler for cooling an air compressed by the blower 12 to have a high temperature, and an intake air throttle valve 14 for changing a circulation area of the intake air, in a sequential order from an upstream side as seen in an intake air flowing direction.

The intake air throttle valve 14 is constituted by a butterfly valve in which a notch is provided so that the intake air can circulate even in a full-close state. The intake air throttle valve 14 is structured such that a vale opening degree is changed in correspondence to a magnitude of a negative pressure applied to a diaphragm type actuator 15 by an electromagnetic valve 16 for controlling a negative pressure, in the same manner as an EGR valve 24 described later. Further, a sensor (not shown) detecting a valve opening degree thereof is provided in a placing portion of the intake air throttle valve 14.

An upstream end of an exhaust passage 20 connected to the engine body 1 is branched into sections corresponding to the respective cylinders 2, and the branched sections are connected to the combustion chambers 4 of the respective cylinders 2 via respective exhaust ports. A turbine 21 rotated due to an exhaust gas flow, an exhaust gas purifying apparatus 22 for purifying air pollutants such as NOx and the like in the exhaust gas, and an NOx sensor 19 for detecting an NOx concentration in the exhaust gas passing through the exhaust gas purifying apparatus 22 are arranged in the exhaust gas passage 20 in a sequential order from an upstream side as seen in the exhaust gas flowing direction. The exhaust gas purifying apparatus 22 absorbs NOx in an $O_2$ excess atmosphere, and on the contrary, uses an NOx trap catalyst (an NOx absorbing catalyst) provided with an NOx absorber discharging the NOx due to the reduction of $O_2$ concentration.

The NOx trap catalyst contains Pt as a catalyst component, Ba as the NOx absorber, and $Al_2O_3$ as a catalyst support. In this case, when a percentage content of $O_2$ in the exhaust gas is comparatively high (at a time of being lean), Ba absorbs the NOx (NO and $NO_2$) in the exhaust gas. In addition, Ba frequently absorbs the NOx in a form of $Ba(NO_3)_2$. On the other hand, Ba discharges the absorbed NOx into the exhaust gas in a form of NO or $NO_2$, at a time when the percentage content of $O_2$ in the exhaust gas (at a time of being rich). Further, at this time, Pt utilizes HC in the exhaust gas as a reducing agent to reduce and purify the NOx into harmless $N_2$.

The exhaust gas purifying apparatus 22 using the NOx trap catalyst is provided with a cordierite catalyst support formed in a honeycomb structure having a lot of small diameter hole portions (through holes) extending in parallel to each other along the exhaust gas flow direction, although details are not illustrated, and is structured such that an NOx trap catalyst layer is formed on each of through hole wall surfaces. In particular, the catalyst layer including the NOx trap catalyst mentioned above is carried on a catalyst support such as alumina or an MFI type zeolite (ZSM5) as a porous material. Further, the exhaust gas circulates within a lot of hole portions formed in the catalyst support. Accordingly, when an amount of soot (smoke) contained in the exhaust gas is large, there is a risk that the hole portion is clogged. However, in this engine, since the generating amount of soot is reduced on the basis of the post injection as described later, the problem mentioned above is not generated.

A turbo supercharger provided with the blower 12 arranged in the intake passage 10 and the turbine 21 arranged in the exhaust passage 20 is a variable geometry turbo (VGT) capable of changing a nozzle cross sectional area of the exhaust passage 20. The turbo supercharger 25 is provided with a diaphragm type actuator 30 for changing a nozzle cross sectional area, and an electromagnetic valve 31 for controlling a negative pressure of the actuator 30.

An exhaust gas recirculation passage 23 (hereinafter, refer to an "EGR passage 23") for recirculating a part of the exhaust gas as an EGR to the intake passage 10 is connected to the exhaust passage 20 in an upstream side of the turbine 21. Further, a downstream end of the EGR passage 23 is connected to the intake passage 10 in a downstream side of the intake air throttle valve 14. A negative pressure operation type exhaust gas recirculation amount adjusting valve 24 (hereinafter, refer to an "EGR valve 24") in which a valve opening degree can be adjusted is arranged in a downstream portion of the EGR passage 23, and an exhaust gas recirculating means 33 is constituted by the EGR valve 24 and the EGR passage 23. In this case, the exhaust gas recirculating means 33 is provided mainly for reducing a combustion temperature of the fuel to reduce a generating amount of NOx.

The EGR valve 24 is structured such that a valve main body is energized in a closing direction by a spring and is energized in an opening direction by a diaphragm type actuator 24a, thereby linearly adjusting an opening degree of the EGR passage 23, although details are not illustrated. A negative passage 27 is connected to the actuator 24a, and the negative pressure passage 27 is connected to a vacuum pump 29 (negative pressure source) via an electromagnetic valve 28 for controlling the negative pressure. Further, the electromagnetic valve 28 adjusts the negative pressure for driving the EGR valve by communicating or shutting the negative pressure passage 27, whereby the EGR valve 24 is driven so as to be opened or closed. Further, a lift sensor 26 for detecting a position of the valve main body is provided in the position of the EGR valve 24.

The fuel injector 5, the high pressure fuel supply pump 8, the intake air throttle valve 14, the EGR valve 24, the turbo supercharger 25 and the like are controlled with respect to operating states thereof in correspondence to control signals outputted from an engine control unit 35 (hereinafter, refer to as an "ECU 35") described later. Further, an output signal of the pressure sensor 6a, an output signal of the crank angle sensor 9, an output signal of the air flow sensor 11, an output signal of a water temperature sensor 18, and an output signal of an accelerator sensor 32 for detecting an operation amount of an accelerator pedal operated by a driver are inputted to the ECU 35.

The ECU 35 is provided with an activating state judging section (or device) 37, an exhaust gas recirculation control section (or device) 39, a main injection control section (or device) 40 and a post injection control section (or device) 41. In this case, the activating state judging section 37 judges whether or not the exhaust gas purifying apparatus 22 (NOx trap catalyst) is in an activating state. The exhaust gas recirculation control section 39 drives the EGR valve 24 in correspondence to an operating state of the engine to control an exhaust gas recirculation amount.

The main injection control section 40 (main injection device) controls an injecting state of the fuel (main injection fuel) injected from the fuel injector 5 by the main injection near a top dead center of the compression stroke, in correspondence to the operating state of the engine. The post injection control section 41 (post injection device) controls an injecting state of the fuel (post injection fuel) injected from the fuel injector 5 by the post injection on the basis of a main injection combustion end timing ("main injection fuel combustion end timing" or "diffusing combustion end timing") at a predetermined timing (within a predetermined period of the expansion stroke after the main injection) from the main injection timing of the fuel to the expansion stroke. In addition, as described later, the post injection control section 41 executes a post injection when NOx is released from the NOx absorber.

In the case of the operation state in which an exhaust amount of Raw NOx from the interior portion of the combustion chamber 4, for example, in the case that the engine is in the operation state having a middle load or more and a middle rotation or more, or in the case that the exhaust gas purifying apparatus 22 (NOx trap catalyst) is in an inactive state, or the like, the post injection is executed at a predetermined timing within a range of ATDC (after top dead center) 30 to 60 °CA (crank angle) after the main injection. Accordingly, it is possible to restrict (control) the discharge of NOx into the atmospheric air.

In this engine, it is possible to reduce the soot generated in accordance with the main injection by executing the post injection at the predetermined timing after the main injection. In this case, in the driving condition in which the amount of soot discharged from the combustion chamber 4 tends to become large, the post injection is executed at a predetermined timing set on the basis of a timing at which the diffusing combustion of the fuel in accordance with the main injection is ended.(a timing of ATDC 30 to 60 °CA, in the operating state in which the engine speed is equal to or more than 1500 rpm), whereby the discharge amount of the soot is reduced. In addition, as the operating state in which the discharge amount of soot is large, for example, there can be listed up an operating state in which the engine load is equal to or more than a middle load, an operating state in which the engine speed is equal to or more than a middle rotational speed such as about 2000 rpm, or a case that in the case that a diesel particulate filter (DPF) is placed in the exhaust gas passage 20, the DPF is in a low temperature state equal to or less than 300°C and the purifying function is low.

Further, the main injection corresponds to an injection executed at a predetermined timing after the intake stroke before in an early stage of the expansion stroke at an injection amount corresponding to a required output or more. In the case that the diffusing combustion of all or a part of the fuel is executed in accordance with the main injection, the soot is generated, so that the post injection is executed for reducing the soot. In this case, when executing the main injection at a desired timing after the timing near the top dead center of the compression stroke before the early timing of the expansion stroke, the diffusing combustion can be executed with respect to all the fuel except the case of a low load. On the contrary, in the case of the low load, premix combustion is executed with respect to a part of the fuel, and the diffusing combustion is executed with respect to the remaining fuel.

Further, when executing the main injection after the intake stroke before the top dead center of the compression stroke, the premix combustion is mainly executed, and in the case of this combustion, the soot is hardly generated. There is also a case that the fuel attached to the wall surface of the combustion chamber is ignited near the top dead center of the compression stroke and the diffusing combustion is executed, thereby generating the soot. However, even in this case, it is possible to reduce the soot in accordance with the post injection. In addition, this includes a case that the main injection is executed separately by at least two times including a predetermined timing after the intake stroke before the top dead center of the compression and a predetermined timing after a timing near the top dead center of the compression before an early stage of the expansion stroke.

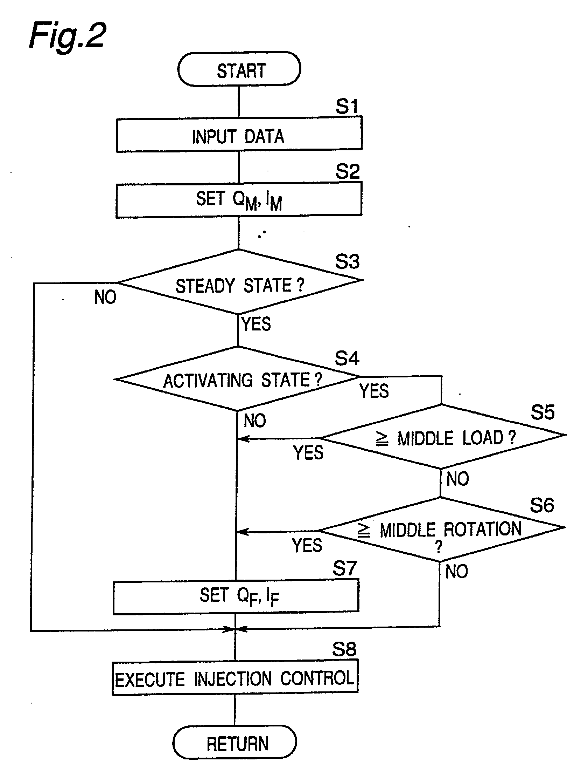

A description will be given below of a control way of the fuel injection control in the engine. At first, a description will be given of a control way of a basic control in the fuel injection control with reference to a flow chart shown in Fig. 2.

As shown in Fig. 2, in this fuel injection control, at first, detection data of the respective sensors are inputted in Step S1. Next, in Step S2, a fuel injection amount $Q_M$ in the main injection corresponding to a required torque of the engine and a main injection timing $I_M$ are read from a preset map to be set. Thereafter, in Step S3, it is judged whether or not the engine is in a steady operation state.

In the case that it is judged in Step S3 that the engine is in the steady state (YES), it is judged in Step S4 by the activating state judging section 37 provided in the ECU 35 whether or not the exhaust gas purifying apparatus 22 (NOx trap catalyst) is in an activating state having a temperature equal to or more than a predetermined temperature. Here, when it is judged that the exhaust gas purifying apparatus 22 is in the activating state (YES), it is judged in Step S5 whether or not the engine load is equal to or more than a middle load. Further, when it is judged that the engine load is not equal to or more than the middle load (NO), it is judged in Step S6 whether or not the engine speed is equal to or more than a middle rotation.

Accordingly, in the case that it is judged in Step S4 that the exhaust gas purifying apparatus 22 (NOx trap catalyst) is not in the activating state (is in the inactive state) (NO), in the case that it is judged in Step S5 that the engine load is equal to or more than the middle load (YES) or in the case that it is judged in Step S6 that the engine speed is equal to or more than the middle rotation (YES), a fuel injection amount $Q_F$ in the post injection corresponding to the operating state of the engine and a post injection timing $I_F$ are read out from a preset map to be set in Step S7. Accordingly, the post injection timing is set at a predetermined timing within the ATDC 30 to 60 °CA after the main injection. Thereafter, the injection control of the fuel is executed in Step S8.

As mentioned above, for example, in the case of executing the post injection within the range between the ATDC 30° and 60° after the main injection, at a timing at which the diffusing combustion generated after the fuel (the main injection fuel) injected within the combustion chamber 4 in accordance with the main injection is ended (hereinafter, refer to as a "diffusing combustion end timing"), the combustion of the fuel (the post injection fuel) injected within the combustion chamber 4 in accordance with the post injection is executed. Accordingly, mixing between the soot and the oxygen which exist within the combustion chamber 4 at the diffusing combustion end timing is promoted. In the manner mentioned above, since the post injection fuel is injected and the combustion is started in a state of being easily ignited, it is possible to reduce the generation of the soot.

in this case, a description will be given in detail of the diffusing combustion end timing. An aspect of the diffusing combustion is determined on the basis of a heat generation rate. For example, in accordance with a publication "Internal Combustion Engine Lecture (issued by Yokendo Print Co., Ltd, written by Fujio Nagao), the heat generation rate is expressed by the following formula 1.

$$dQ/d\theta = A/(K_\theta - 1)\cdot[V_\theta\cdot(dP_\theta/d\theta)$$

$$+ K_\theta\cdot P_\theta\cdot(dV_\theta/d\theta)] \qquad\qquad \text{formula 1}$$

A: mechanical equivalent of heat
$K_\theta$: ratio of specific heat
$V_\theta$: engine displacement
$P_\theta$: cylinder pressure
$\theta$: crank angle

For example, in accordance with a written manual of a fuel analyzing apparatus CB566 manufactured by Ono Instruments Co., Ltd., the ratio of specific heat $K_\theta$ is expressed by the following formulas 2 to 5.

$$K_\theta = Cp/Cv \qquad\qquad \text{formula 2}$$

$$Cp = ap + b\cdot(T_\theta/100) + c\cdot(T_\theta/100)^2$$

$$+d\cdot(100/T_\theta) \qquad\qquad \text{formula 3}$$

$$Cv = Cp - (A \cdot Ro)/M \qquad\qquad \text{formula 4}$$

$$T_{\theta} = (P_{\theta} \cdot V_{\theta})/29.27 \cdot G \qquad\qquad \text{formula 5}$$

Cp: specific heat at constant pressure
Cv: specific heat at constant volume
Ro: gas constant
M: molecular weight of air
$T_{\theta}$: gas temperature
G: gas weight
ap, b, c, d: other constants

In accordance with the formulas 2 to 5, a heat generation rate dQ/dθ expressed by the formula 1 is a function $f(P_{\theta}, V_{\theta})$ in which the cylinder pressure $P_{\theta}$ and the engine displacement $V_{\theta}$ are independent parameter. Further, the engine displacement $V_{\theta}$ is expressed by the following formula 6 on the basis of a bore diameter B and a stroke S.

$$V_{\theta} = (\pi \cdot B^2 \cdot S/8) \cdot (1 - \cos\theta) \qquad\qquad \text{formula 6}$$

Accordingly, the heat generation rate dQ/dθ is expressed by the following formula 7.

$$dQ/d\theta = [f(P_{\theta} + _{\Delta\theta}, V_{\theta} + _{\Delta\theta}) - f(P_{\theta}, V_{\theta})]/\Delta\theta \qquad\qquad \text{formula 7}$$

Therefore, if the cylinder pressure data per every crank angles exist, it is possible to compute the heat generation rate on the basis thereof.

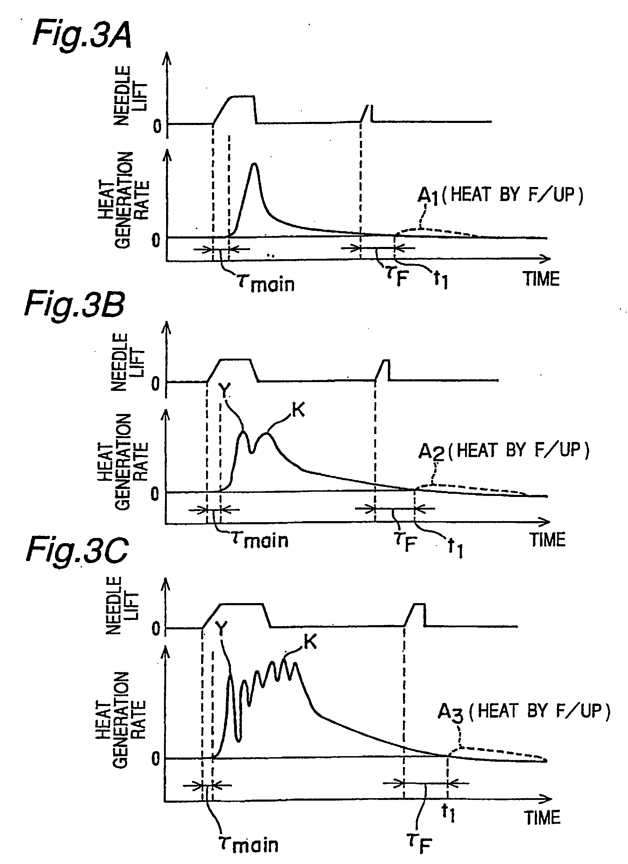

Figs. 3A to 3C are graphs showing a change with age of the heat generation rate determined in the manner mentioned above, with respect to three cases in which needle lift patterns (fuel injection amounts) are different from each other. As shown in Figs. 3A to 3C, after the heat generation rate indicates a great value in a positive direction in correspondence to the combustion of the main injection fuel, the heat generation rate becomes 0 in correspondence to the end of the diffusing combustion. Accordingly, it is possible to determine the diffusing combustion end timing on the basis of a timing $t_1$ in which the heat generation rate becomes substantially 0. In this case, in Figs. 3A to 3C, $A_1$ to $A_3$ (broken lines) respectively show a heat generation rate (heat generation rate in accordance with F/UP) in accordance with the combustion of the post injection fuel.

In accordance with this embodiment, the post injection timing is set so that the combustion of the post injection fuel is started near the timing $t_1$ previously determined in the manner mentioned above. The post injection timing is set, with taking an ignition lag time $T_F$ (for example, between 0.4 and 0.7 ms) previously set on the basis of the operation state into consideration, to be the ignition lag time $T_F$ earlier than t1. The ignition lag time $T_F$ is different in correspondence to an engine displacement and a fuel injection pressure, and becomes between about 0.4 and 0.7 ms in the case that the injection pressure is between 50 and 20 MPa in a 100 to 3000 cc class engine (which is different in correspondence to the operation state).

In this case, the ignition lag time $T_F$ of the post injection fuel is longer than an ignition lag time $T_{main}$ (about 0.1 (at a time of high rotation) to 0.3 ms (at a time of low rotation)) of the main injection executed near the top dead center of the compression stroke, however, this is because the post injection is executed at a time when the cylinder temperature after the top dead center of the compression is comparatively low.

Further, an injection driving signal to the fuel injector 5 is stored in the ECU in addition to the ignition lag times $T_F$ and $T_{main}$, and with taking a reactive time (a drive lag time) between an ignition valve opening and closing signal and an actual injection start or stop.

The diffusing combustion end timing changes in correspondence to the operation state of the engine, and there is a tendency that the diffusing combustion end timing is behind time in accordance that the engine load or the engine speed is increased. For example, in the case of the middle load and middle rotation in which the engine speed is controlled to 2000 rpm and an average effective pressure Pe is controlled to 0.57 MPa, when computing the heat generation rate within the combustion chamber 4 in a thermodynamic manner on the basis of a pressure change within the cylinder corresponding to the crank angle and a volume change of the cylinder so as to form a graph, the graph in Fig. 3B is obtained. In this case, there is generated a heat generation Y in accordance with a premix combustion of the main injection fuel injected near the compression top dead center of the piston, and a heat generation K in accordance with the diffusing combustion having the same level. Then, it is confirmed that the diffusing combustion is ended at a timing $t_1$ about 0.5 ms retarded from about ATDC 35°CA.

On the contrary, for example, at a time having a high load and a high rotation in which the engine speed is controlled to 2500 rpm, and the average effective pressure Pe is controlled to 0.9 MPa, a heat generation K in accordance with the diffusing combustion is produced for quite long period in comparison with the heat generation Y in accordance with the premix combustion of the main injection fuel, as shown in Fig 3C. In this case, it is confirmed that the diffusing combustion is ended at a very late timing $t_1$ which is about 0.7 ms retarded from about ATDC 47°CA.

In this case, for example, at a time having a low load and a low rotation in which the engine speed is controlled to 1500 rpm, and the average effective pressure Pe is controlled to 0.3 MPa, it is hard to section the premix combustion of the main injection fuel and the diffusing combustion in correspondence to the heat generating state, as shown in Fig. 3A. In this case, it is confirmed that the combustion is ended at a comparatively earty timing $t_1$ which is about 0.6 ms retarded from about ATDC 30°CA.

Next, a description will be given of a soot reducing effect caused by starting the post injection near the diffusing combustion end timing.

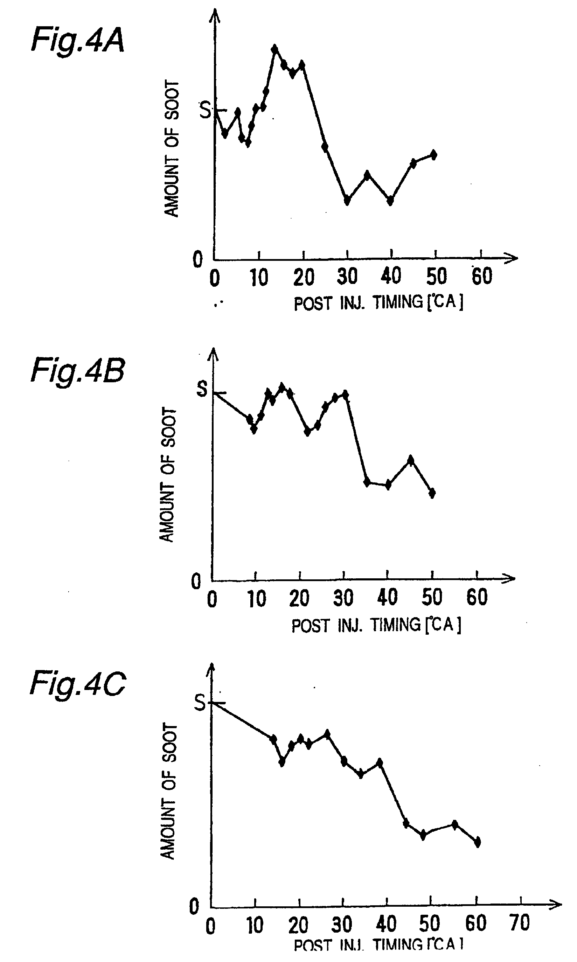

Fig. 4A shows a result obtained by measuring the generating amount of soot by variously changing the post injection timing after the main injection at a time having a low load and a low rotation of the engine in which the engine speed is controlled to 1500 rpm and the average effective pressure Pe is controlled to 0.3 MPa. As shown in Fig. 4A, in the case of setting the post injection timing to be later than the ATDC 30°CA after the main injection, the generating amount of soot is significantly reduced.

Fig. 4B shows a result obtained by measuring the generating amount of soot by variously changing the post injection timing after the main injection at a time having a middle load and a middle rotation in which the engine speed is controlled to 2000 rpm and the average effective pressure Pe is controlled to 0.57 MPa. As shown in Fig. 4B, in the case of setting the post injection timing to be later than the ATDC 35°CA after the main injection, the generating amount of soot is significantly reduced.

Fig. 4C shows a result obtained by measuring the generating amount of soot by variously changing the post injection timing after the main injection at a time having a high load and a high rotation in which the engine speed is controlled to 2500 rpm and the average effective pressure Pe is controlled to 0.9 MPa. As shown in Fig. 4C, in the case of setting the post injection timing to be later than the ATDC 47° after the main injection, the generating amount of soot is significantly reduced. In addition, in the measurement mentioned above, the engine load is set to be fixed, and the rate of the post injection fuel amount with respect to the main injection fuel amount is set to 20 %.

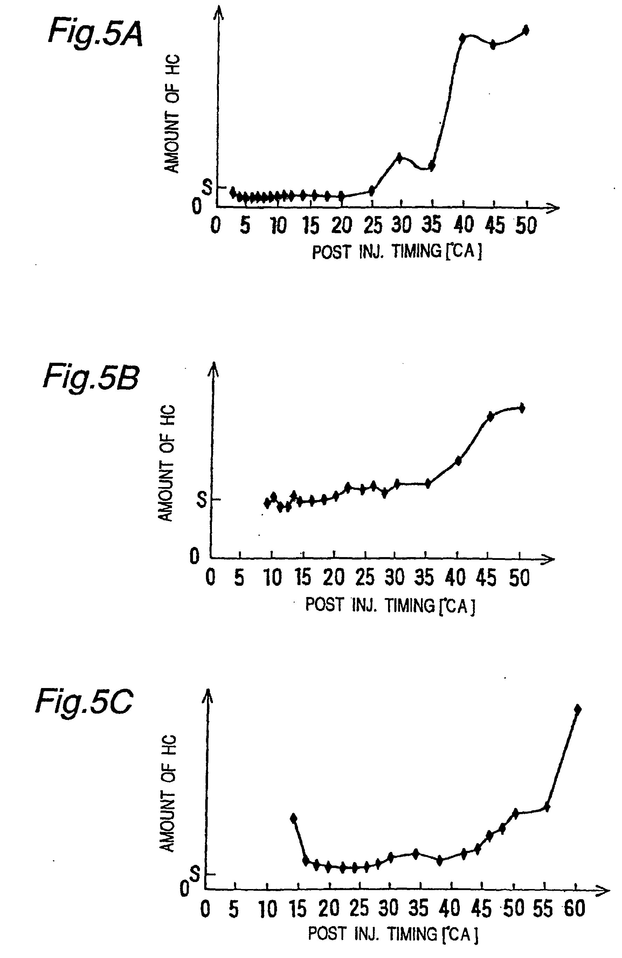

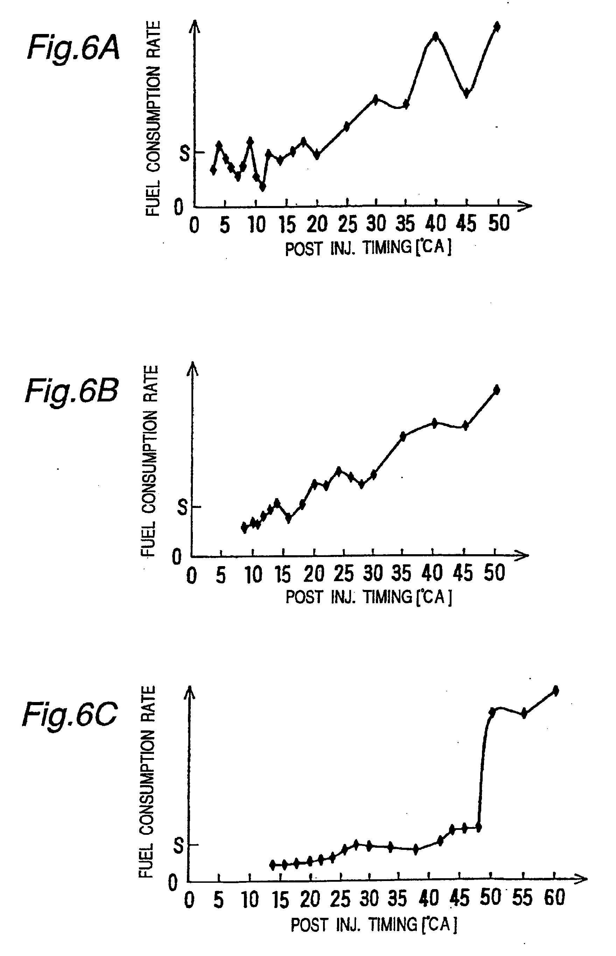

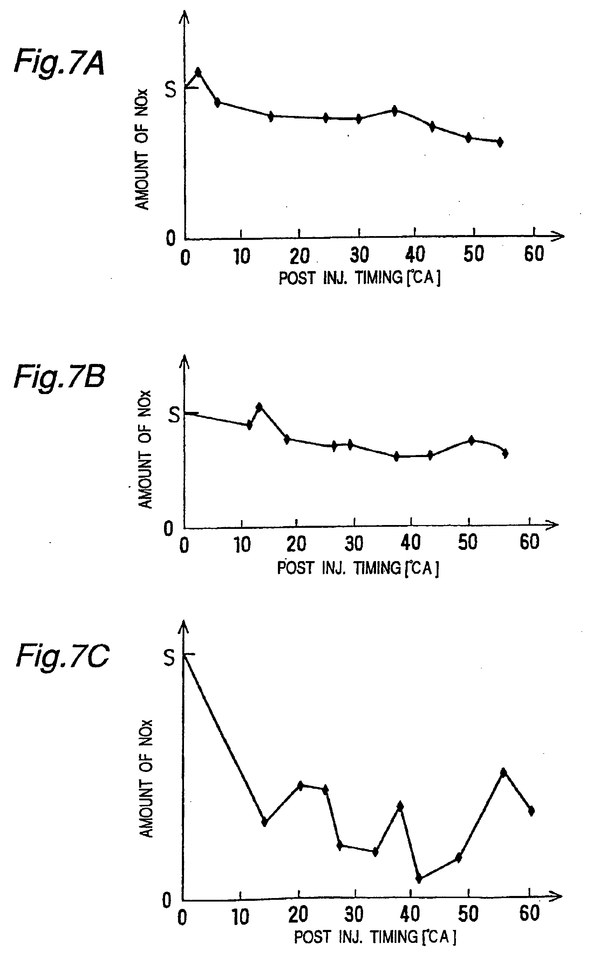

In Figs. 4A to 4C, reference symbol S in a vertical axis indicates a generating amount of soot in the case that the post injection is not executed (hereinafter, refer to as a "reference value"). In addition, the same matter is applied to the case of an HC amount (Fig. 5), a rate of specific fuel consumption (Fig. 6) and NOx amount (Fig. 7) which will be described later.

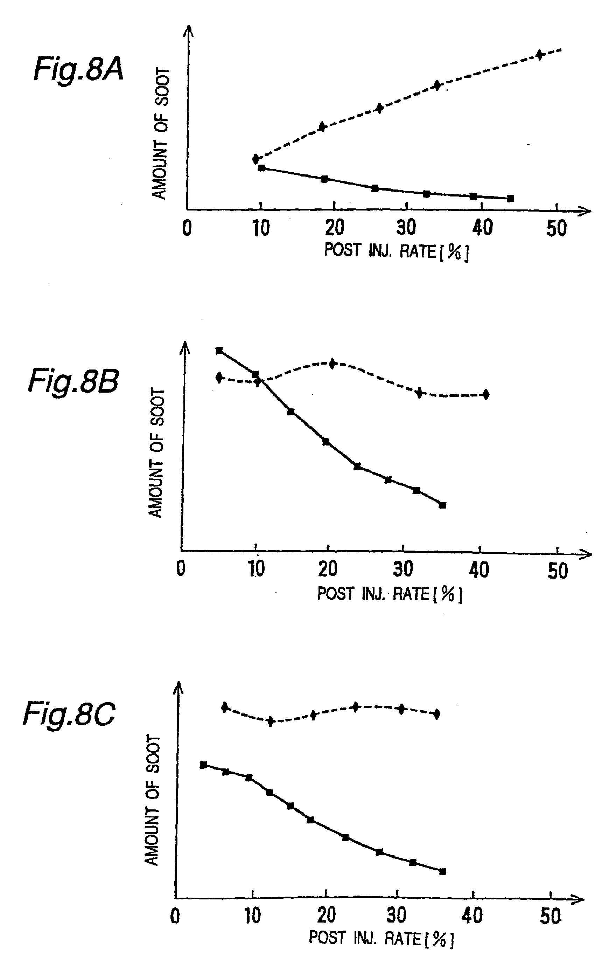

A solid line graph in Fig. 8A shows a result obtained by measuring the generating amount of soot by variously changing a rate of post injection fuel amount with respect to a main injection fuel amount (hereinafter, refer to as an "post injection rate") within a range between 10 and 45 %, in the case that the post injection is executed at the timing of ATDC 30°CA which is considered to be a timing an ignition lag advanced from a timing near the diffusing combustion end timing of the main injection fuel, at a time having the low load and the low rotation in which the engine speed is controlled to 1500 rpm and the average effective pressure Pe is controlled to 0.3 MPa. As shown by the solid line in Fig. 8A, the generating amount of soot is reduced in correspondence to an increase of the post injection rate. On the contrary, as shown by a broken line in Fig. 8A, in the case that the post injection is executed at a timing of ATDC 8°CA which is considered to be a timing before the diffusing combustion end timing, the generating amount of soot is increased in correspondence to the increase of the rate of post injection amount.

Fig. 8B shows a result obtained by measuring the generating amount of soot in the same manner as that of the case in Fig. 8A in the case that the post injection is executed at the timing of ATDC 35°CA which is considered to be a timing the ignition lag advanced from the timing near the diffusing combustion end timing and at a timing of ATDC 20°CA which is considered to be a timing before the diffusing combustion end timing, at a time having the middle load and the middle rotation in which the engine speed is controlled to 2000 rpm and the average effective pressure Pe is controlled to 0.57 MPa.

Fig. 8C shows a result obtained by measuring the generating amount of soot in the same manner as that of the case in Fig. 8A in the case that the post injection is executed at the timing of ATDC 48°CA which is considered to be a timing the ignition lag advanced from the timing near the diffusing combustion end timing and at the timing of ATDC 20°CA which is considered to be a timing before the diffusing combustion end timing, at a time having the high load and the high rotation in which the engine speed is controlled to 2500 rpm and the average effective pressure Pe is controlled to 0.9 MPa.

As is apparent from Figs. 8B and 8C, there is obtained a result having the same tendency as that of the case at a time having the low load and the low rotation shown in Fig. 8A.

In accordance with the result of measurement mentioned above, when setting the post injection timing on the basis of the diffusing combustion end timing of the main injection fuel and igniting the post injection fuel at the diffusing combustion end timing or near the same, it is known that the post injection is executed in a state in which carbon and oxygen existing within the combustion chamber 4 are sufficiently mixed, the carbon is effectively burned, and the discharge amount of soot from the combustion chamber 4 to the exhaust passage 20 is reduced.

The diffusing combustion end timing changes in correspondence to the engine load, the engine speed or the like. Accordingly, for example, it is possible to set the timing $t_1$ in which the heat generating rate due to the diffusing combustion becomes 0 as shown in Fig. 3A to 3C by making a map on the basis of various experiments in which the operating states of the engine are respectively different, and reading out from the map.

Further, the structure may be made such that there is provided with a combustion state judging section for judging a diffusing combustion state on the basis of a detection signal of a temperature sensor detecting the temperature within the combustion chamber 4, a detection signal of a combustion light sensor, a detection signal of a sensor for detecting an amount of hydrogen, hydro carbon or the like having high reactivity in which an electric charge existing within the combustion chamber 4 is biased, or the like. In this case, the structure may be made such as to determined the diffusing combustion end timing by judging whether or not the temperature after the main injection becomes a low temperature equal to or lower than a predetermined temperature, whether or not an emission of the combustion light is lost, whether or not the amount of hydrogen or hydro carbon is suddenly reduced, or the like, by means of the combustion state judging means, and to set the post injection timing in the next combustion cycle on the basis thereof. Further, the structure may be made such as to judge the diffusing combustion end timing by calculating a differential value of a value obtained by subtracting an adiabatic expansion temperature from a cylinder temperature detected by the temperature sensor, and detecting a timing when the differential value becomes 0 from a negative value.

As mentioned above, when setting a start timing of post fuel injection in correspondence to the respective operation states so that the combustion of post injection fuel is started at a timing near the diffusing combustion end timing (within $\pm 5°$ of the crank angle), preferably immediately after the diffusing combustion ends, on the basis of the diffusing combustion end timing judged on the basis of the operation state of the engine, it is possible to execute the post injection at an optimum timing in correspondence to the operation state of the engine, and it is possible to effectively reduce the discharge amount of soot.

A description will be given below of an NOx reducing effect caused by the fuel injection control of the engine.

Fig. 5A shows a result obtained by measuring the HC amount by variously changing the post injection timing within a range between ATDC 2.5 and 50°CA after the main injection at a time having a low load and a low rotation of the engine in which the engine speed is controlled to 1500 rpm and the average effective pressure Pe is controlled to 0.3 MPa. As shown in Fig. 5A, in the case of setting the post injection timing to be later than the ATDC 30°CA after the main injection, the HC amount is significantly increased.

Fig. 5B shows a result obtained by measuring the HC amount by variously changing the post injection timing at a time having a middle load and a middle rotation in which the engine speed is controlled to 2000 rpm and the average effective pressure Pe is controlled to 0.57 MPa. As shown in Fig. 5B, in the case of setting the post injection timing to be later than the ATDC 35°CA after the main injection, the HC amount is significantly increased.

Fig. 5C shows a result obtained by measuring the HC amount by variously changing the post injection timing at a time having a high load and a high rotation in which the engine speed is controlled to 2500 rpm and the average effective pressure Pe is controlled to 0.9 MPa. As shown in Fig. 5C, in the case of setting the post injection timing to be later than the ATDC 45°CA after the main injection, the HC amount is significantly increased. In the measurement mentioned above, the engine load is set to be fixed, and the rate of the post injection fuel amount with respect to the main injection fuel amount is set to 20 %.

In this case, in Figs. 5A to 5C, reference symbol S in a vertical axis indicates a reference value of the HC amount.

In accordance with the result of measurement mentioned above, in the case that the post injection is executed after ATDC 30°CA of the main injection, it is found that the HC amount is increased and an amount of hydrogen, hydro carbon or the like having high reactivity is increased, whereby the discharge amount of Raw NOx from the combustion chamber 4 to the discharge passage 20 can be reduced

Figs. 6A to 6C respectively show results obtained by measuring a specific fuel consumption rate (specific fuel consumption) by variously changing the post injection timing at the timing having the low load and the low rotation, the timing having the middle load and the middle rotation and the timing having the high load and the high rotation. In this case, in Figs. 6A to 6C, reference symbol S in a vertical axis indicates a reference value of the specific fuel consumption rate. As shown in Figs. 6A to 6C, it is known that the specific fuel consumption rate is deteriorated in accordance that the post injection timing is behind time. This is because the post injection fuel does not contribute to an improvement of engine output in accordance that the post injection timing is behind time. Accordingly, in order to prevent the specific fuel consumption from being deteriorated, it is preferable to set the post injection timing before the ATDC 60°CA after the main injection. Therefore, it is possible to effectively prevent the NOx from being discharged into the atmospheric air so as to purify the exhaust gas without deteriorating the specific fuel consumption performance, for example, by executing the post injection at the predetermined timing within the range between ATDC 30 and 60°CA after the main injection.

Figs. 7A to 7C respectively show results obtained by measuring an NOx discharge amount by variously changing the post injection timing at the timing having the low load and the low rotation, the timing having the middle load and the middle rotation and the timing having the high load and the high rotation. In this case, in Figs. 7A to 7C, reference symbol S in a vertical axis indicates a reference value of the NOx discharge amount. As shown in Figs. 7A to 7C, it is possible to effectively prevent the NOx from being discharged into the atmospheric air so as to purify the exhaust gas without deteriorating the specific fuel consumption by executing the post injection at the predetermined timing within the range between ATDC 30 and 60°CA after the main injection. In the measurement mentioned above, an exhaust gas circulating rate is controlled to be fixed. When the circulating control of the exhaust gas is executed by the exhaust gas circulation control means 39, a generating amount of Raw NOx is changed on the basis of the EGR effect due to an exhaust pressure increase generated by the post injection, so that it becomes hard to accurately confirm a reducing effect of Raw NOx due to the post injection.

In this case, the post injection timing may be set in correspondence to a time set on the basis of a timer, in place of being set in correspondence to the crank angle. In this case, it is possible to effectively prevent the NOx from being discharged into the atmospheric air without deteriorating the specific fuel consumption, by executing the pöst injection at a predetermined timing within a range between 1.2 and 4 ms after the compression top dead center after the main injection.

As mentioned above, in accordance with the fuel injection control of the engine, it is possible to achieve both of reduction of the soot generating amount and the NOx generating amount, and it is possible to improve the specific fuel consumption performance by setting the post injection timing on the basis of the diffusing combustion end timing after the main injection. For example, in the case that the engine speed is 1500 rpm and the load is low, the diffusing combustion end timing is a timing about 0.5 ms retarded from the ATDC 30°CA. Accordingly, in order to reduce the generating amount of soot and the generating amount of NOx, the post injection timing may be set near the ATDC 30°CA, for example, to the ATDC 27 to 35°CA, and the optimum timing is the ATDC 30°CA.

In the case that the engine speed is 2000 rpm and the load is middle, the diffusing combustion end timing is a timing about 0.5 ms retarded from the ATDC 35°CA. Accordingly, the post injection timing may be set near the ATDC 35°CA, for example, to the ATDC 33 to 40°CA, and the optimum timing is the ATDC 35°CA.

Further, in the case that the engine speed is 2500 rpm and the load is high, the diffusing combustion end timing is a timing about 0.7 ms retarded from the ATDC 47°CA. Accordingly, the post injection timing may be set near the ATDC 47°CA, for example, to the ATDC 45 to 48°CA, and the optimum timing is the ATDC 47°CA.

Further, in this diesel engine provided with the exhaust turbo supercharger 25 driven by the exhaust gas so as to supercharge the intake air, when a predetermined amount of fuel is injected after the main injection in the manner mentioned above, the exhaust gas pressure is increased and a supercharging operation of the exhaust turbo supercharger 25 is increased. As a result, an amount of fresh air introduced within the combustion chamber 4 is increased, whereby the combustion of carbon existing within the combustion chamber 4 is promoted, and the generation of soot is effectively restricted. Further, when an amount of intake air is increased by the supercharging operation of the exhaust turbo supercharger 25, the diffusing combustion end timing of the main injection fuel tends to be early. Accordingly, it is possible to effectively restrict the generation of soot so as to further reduce an introduction amount of soot discharged to the exhaust passage 20, by compensating the post injection timing in correspondence to the diffusing combustion end timing.

Further, an exhaust gas circulating means 33 for circulating a part of the exhaust gas to an intake system is provided in this diesel engine provided with the exhaust turbo supercharger 25. In this case, in the case of feedback control a circulating rate of the exhaust gas so as to follow a target value by an exhaust gas circulation control means 39 provided in the ECU 35, when the amount of intake air is increased due to the supercharging operation of the exhaust turbo supercharger 25, an amount of the exhaust gas circulated to the intake system is increased in correspondence thereto. Accordingly, the discharge amount of Raw NOx from the combustion chamber 4 to the exhaust gas passage 20 is further effectively reduced.

Further, in the case that the NOx trap catalyst within the exhaust gas purifying apparatus 22 interposed in the exhaust gas passage 20 is in an inactive state, it is possible to simultaneously obtain an operation of increasing an amount of hydrogen or the like having a high reactivity within the combustion chamber 4 so as to reduce the Raw NOx, and an operation of promoting the combustion of carbon so as to reduce the discharge amount of soot, as mentioned above, by executing the control of setting the post injection timing on the basis of the diffusing combustion end timing.

In particular, in the case that the NOx trap catalyst is in an active state, the post injection timing is set to a timing in which an amount of reducing agent supplied to the NOx trap catalyst can be sufficiently secured, that is, a predetermined timing within the range between ATDC 60° and 180°CA, and on the contrary, in the case that the NOx trap catalyst is in the inactive state, the post injection may be executed in correspondence to the diffusing combustion end timing by advancing the post injection timing. In accordance with this structure, at a time when the NOx trap catalyst is activated, it is possible to restrict the discharge of NOx into the atmospheric air on the basis of the purifying operation. On the other hand, at a time when the NOx trap catalyst is inactive, it is possible to effectively reduce the NOx discharge amount from the combustion chamber 4 to the exhaust gas passage 20 by increasing the amount of hydrogen having a high reactivity within the combustion chamber 4.

As shown by the solid lines in Figs. 8A to 8C previously described, in accordance with the corresponding relation between the post injection rate on the basis of the experiment and the soot generating amount, it is known that it is possible to restrict the generation of soot in accordance that the post injection rate is made large, in any operation states comprising the low load and low rotation, the middle load and middle rotation, and the high load and high rotation.

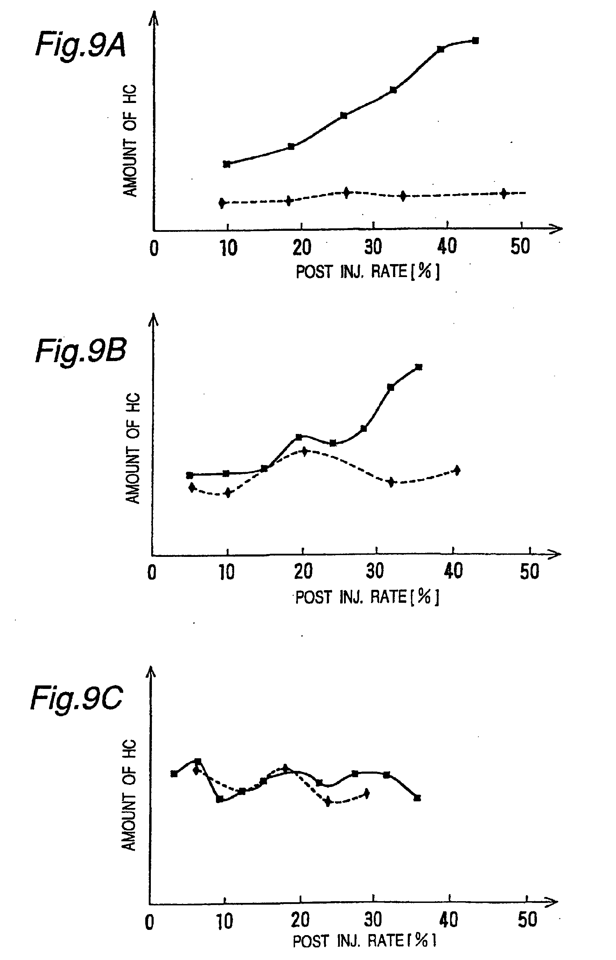

Fig. 9A shows a result obtained by measuring the HC amount by variously changing a rate of post injection, in the case that the post injection is executed at the timing of ATDC 30°CA and the timing of ATDC 8°CA, at a time having the low load and the low rotation in which the engine speed is controlled to 1500 rpm and the average effective pressure Pe is controlled to 0.3 MPa. As shown by a solid line in Fig. 9A, in the case that the post injection is executed at the timing of ATDC 30°CA near the diffusing fuel end timing, the HC amount is increased in correspondence to an increase of the post injection rate. On the contrary, as shown by a broken line in Fig. 9A, in the case that the post injection is executed at a timing of ATDC 8°CA which is a timing quite before the diffusing combustion end timing, the HC amount is hardly changed.

Fig. 9B shows a result obtained by measuring the HC amount in the same manner as that of the case in Fig. 9A in the case that the post injection is executed at the timing of ATDC 35°CA and at the timing of ATDC 20°CA, at a time having the middle load and the middle rotation in which the engine speed is controlled to 2000 rpm and the average effective pressure Pe is controlled to 0.57 MPa. In this case, as shown by a solid line in Fig. 9b, in the case that the post injection is executed at the timing of ATDC 35°CA near the diffusing fuel end timing, the HC amount is increased in correspondence to an increase of the post injection rate. On the contrary, as shown by a broken line in Fig. 9B, in the case that the post injection is executed at the timing of ATDC 20°CA which is a timing quite before the diffusing combustion end timing, the HC amount is not simply increased or reduced with respect to the post injection rate.

Fig. 9C shows a result obtained by measuring the HC amount in the same manner as that of the case in Fig. 9A in the case that the post injection is executed at the timing of ATDC 48°CA and at the timing of ATDC 20°CA, at a time having the high load and the high rotation in which the engine speed is controlled to 2500 rpm and the average effective pressure Pe is controlled to 0.9 MPa. In this case, in both cases, the HC amount is not simply increased or reduced with respect to the post injection rate.

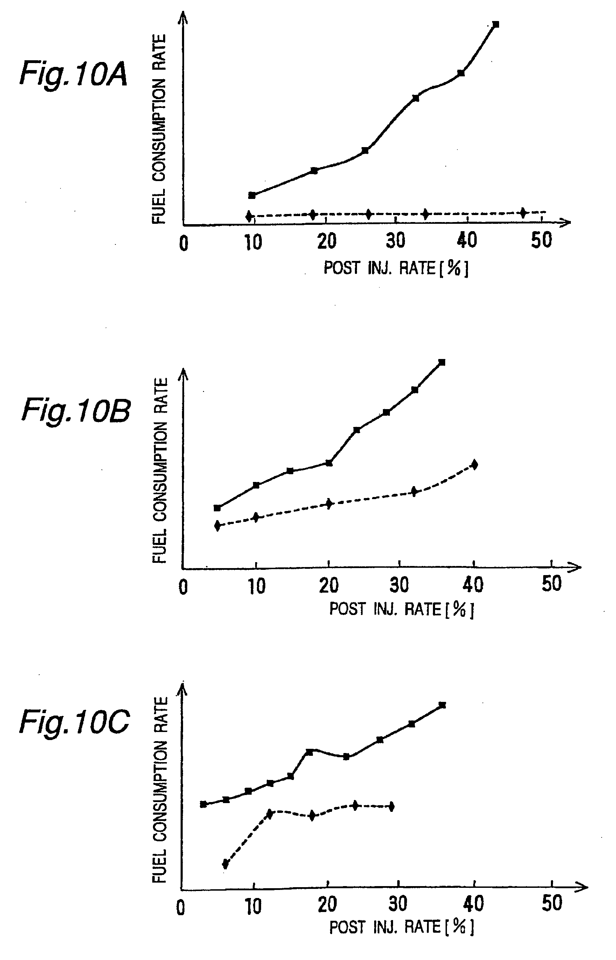

Fig. 10A shows a result obtained by measuring the specific fuel consumption rate by variously changing the post injection rate, in the case that the post injection is executed at the timing of ATDC 30°CA and the timing of ATDC 8°CA, at a time having the low load and the low rotation in which the engine speed is controlled to 1500 rpm and the average effective pressure Pe is controlled to 0.3 MPa. As shown by a broken line in Fig. 10A, in the case that the post injection is executed at the timing of ATDC 8°CA which is quite before the diffusing fuel end timing, the specific fuel consumption rate is hardly changed with respect to the increase of the post injection rate. On the contrary, as shown by a solid line in Fig. 10A, in the case that the post injection is executed at the timing of ATDC 30°CA in which the combustion of the post injection fuel is considered to be executed near the diffusing combustion end timing, the specific fuel consumption rate is significantly deteriorated in correspondence to the increase of the post injection rate.

Fig. 10B shows a result obtained by measuring the specific fuel consumption in the same manner as that of the case in Fig. 10A in the case that the post injection is executed at the timing of ATDC 35°CA and at the timing of ATDC 20°CA, at a time having the middle load and the middle rotation in which the engine speed is controlled to 2000 rpm and the average effective pressure Pe is controlled to 0.57 MPa.

Fig. 10C shows a result obtained by measuring the specific fuel consumption in the same manner as that of the case in Fig. 10A in the case that the post injection is executed at the timing of ATDC 48°CA and at the timing of ATDC 20°CA, at a time having the high load and the high rotation in which the engine speed is controlled to 2500 rpm and the average effective pressure Pe is controlled to 0.9 MPa.

As apparent from Figs. 10B and 10C, there are obtained results having tendencies similar to the case of low load and low rotation, shown in Fig. 10A.

Accordingly, when the structure is made such that the post injection timing is set on the basis of the diffusing combustion end timing, and the post injection fuel is ignited at the diffusing combustion end timing or near the same, it is possible to effectively reduce the generating amount of soot without deteriorating the specific fuel consumption by setting the post injection fuel amount to 0.2 to 50 % of the total fuel injection amount, preferably within the range between 15 and 30 %.

In this case, in accordance with this embodiment, the structure is made such that the post injection is executed in correspondence to the activated state of the NOx trap catalyst, or the engine load and the engine speed, however, an aspect of achieving the post injection is not limited to this, and various modifications can be employed. For example, the structure may be made such that the post injection of the fuel is executed in all the operation state of the engine.

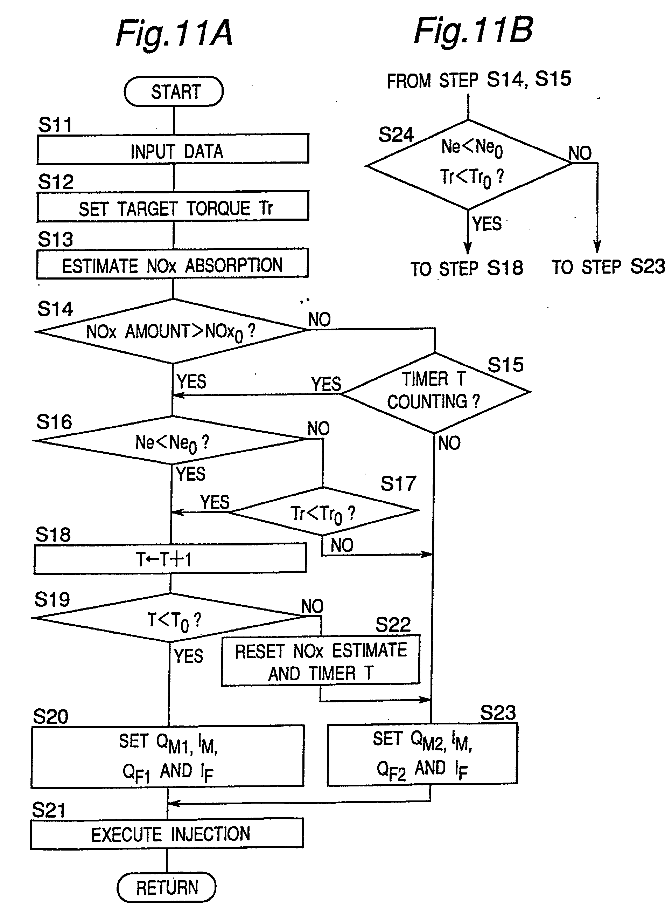

Hereinafter, there will be described a control method of a fuel injection control for releasing the NOx from the NOx absorber in the NOx trap catalyst to reduce and purify the NOx, in the fuel injection control of the engine, with reference to the flow charts shown in Figs. 11A and 11B

As shown in Fig. 11A, in this control routine, at first various kinds of data are input in Step S11, and thereafter a target torque Tr is set on the basis of an accelerator opening degree and a vehicle speed in Step S12. In this case, the target torque Tr is set so as to be larger in accordance with an increase of accelerator opening degree, and an increase of vehicle speed.

Next, in Step S13, the amount of NOx absorbed or adsorbed by the NOx trap catalyst is estimated (hereinafter, referred to "NOx estimate"). Following that, in Step S14, it is judged whether the NOx estimate (amount of NOx) is larger than a threshold $NOx_0$ or not. If the NOx estimate is larger than the threshold $NOx_0$ (YES), it is judged whether the engine speed Ne is smaller than a set value $Ne_0$ or not in Step S16, and further it is judged whether the target torque Tr is smaller than a set value $Tr_0$ or not in Step S17.

Thus, if it is judged that the engine speed Ne is smaller than the set value $Ne_0$ in Step S16 (YES), or it is judged that the target torque Tr is smaller than the set value $Tr_0$ in Step S17, namely if the engine is in a low load state (or low-middle load state) or a low rotation state (or low-middle rotation state), a fuel injection condition for releasing NOx (fuel injection amount and fuel injection timing) is set in Steps S18-S20. On the other hand, if it is judged that the engine speed Ne is equal to or larger than the set value $Ne_0$ in Step S16 (NO), and it is judged that the target torque Tr is equal to or larger than the set value $Tr_0$ in Step S17, namely if the engine is in a high load and high rotation state (or high-middle load and high-middle rotation state) or a low rotation state (or low-middle rotation state), a fuel injection condition for the normal state (fuel injection amount and fuel injection timing) is set in Step S23 ($Q_{M2}$, $I_M$, $Q_{F2}$ and $I_F$).

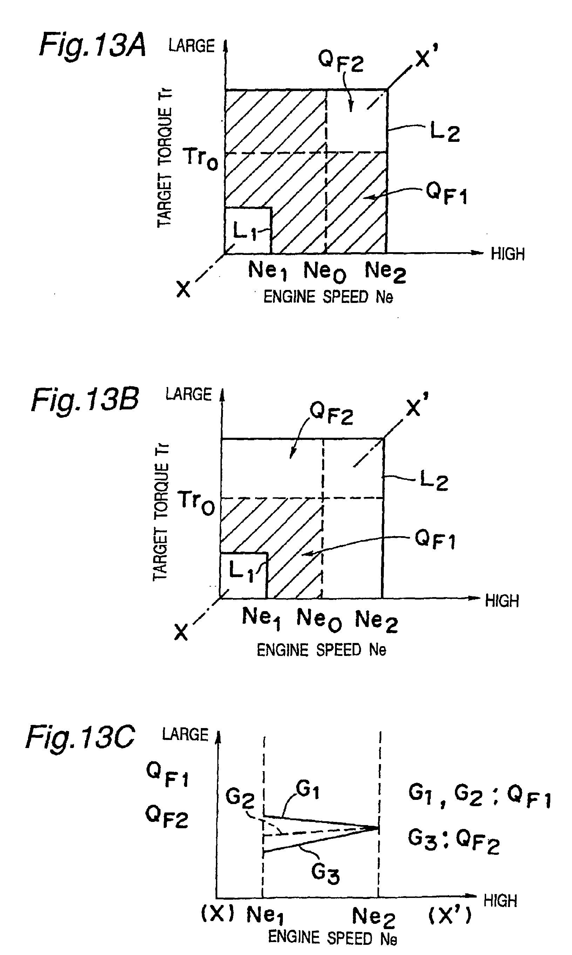

That is, in the region between the line $L_1$ (idle region) and the line $L_2$ (full load) of the fuel injection map in which the engine speed and the target torque are used as parameters shown in Fig. 13A, the fuel injection amount for releasing NOx is set in the area with the slanted lines, while the fuel injection amount for the normal state is set in the area without slanted lines (fuel injection periods are same).

Hereupon, instead of Steps S16 and S17, Step S24 shown in Fig. 11B may be inserted. In this case, if it is judged that the engine speed Ne is smaller than the set value $Ne_0$ and the target torque Tr is smaller than the set value $Tr_0$ in Step S24 (YES), namely if the engine is in a low load and low rotation state (or low-middle load and low-middle rotation state), the fuel injection condition (fuel injection amount) for releasing NOx is set in Steps S18-S20. In the other cases, the fuel injection condition for the normal state is set in Step S23.

In this case, as shown in Fig. 13B, the area (portion with the slanted lines), in which the fuel injection amount for releasing NOx is set, becomes smaller.

In the case that the fuel injection condition for releasing NOx is set, at first, the count value of a timer T is incremented by 1 in Step S18, and then it is judged whether the count value of the timer T is smaller than a set value $T_0$ or not in Step S19. The timer T is used for executing the fuel injection control for releasing NOx during a predetermined time $T_0$. That is, the timer T, whose initial value is 0, begins to count at the time point that the NOx estimate becomes larger than the threshold $NOx_0$ so that the fuel injection control for releasing NOx is started. Then, when it is judged that the count value has reached the predetermined value $T_0$ in Step S19, the present fuel injection control for releasing NOx ends.

However, after the fuel injection control for releasing NOx has been started so that the timer T has begun to count, the fuel injection control for releasing NOx is continued till the timer T counts up even if it is judged that the NOx estimate is equal to or smaller than the threshold $NOx_0$ in Step S14. That is, in the case that it is judged that the NOx estimate is equal to or smaller than the threshold $NOx_0$ in Step S14, it is judged whether the timer T is continuing to count or not in Step S15. If the timer T is continuing to count (YES), Step S18 is executed.

Thus, if it is judged that the count value of the timer T is smaller than the set value $T_0$ in Step S19 (YES), the fuel injection condition for releasing NOx is set in Step S20 ($Q_{M1}$, $I_M$, $Q_{F1}$ and $I_F$). On the other hand, if it is judged that the count value is equal to or larger than the set value $T_0$ (NO), each of the NOx estimate and the timer T is reset in Step S22, and then the fuel injection condition for the normal state is set in Step S23.

In Step S20, the amount of the main injection fuel $Q_{M1}$ and main injection timing $I_M$ for releasing NOx and the amount of the post injection fuel $Q_{F1}$ and post injection timing $I_F$ are set. After that, in Step S21, the main injection and post injection are executed in accordance with the fuel injection condition set in Step S20, and then the control is returned to Step S11.

On the other hand, in Step S23, the amount of the main injection fuel $Q_{M2}$ and main injection timing $I_M$ for the normal state and the amount of the post injection fuel $Q_{F2}$ and post injection timing $I_F$ are set. In this case, the fuel injection amount is set in such a manner that the sum of the amount of the main injection fuel $Q_{M2}$ and the amount of the post injection fuel $Q_{F2}$ corresponds to the target torque Tr. After that, in Step S21, the main injection and post injection are executed in accordance with the fuel injection condition set in Step S23, and then the control is returned to Step S11.

Hereupon, the amount of the post injection fuel $Q_{F1}$ for releasing NOx is larger than the amount of the post injection fuel $Q_{F2}$ for the normal state ($Q_{F1}>Q_{F2}$). Accordingly, in this example, the difference ($Q_{F1}-Q_{F2}$) between the amount of the post injection fuel $Q_{F1}$ for releasing NOx and the amount of the post injection fuel $Q_{F2}$ for the normal state becomes the substantial post injection fuel for releasing NOx from the NOx absorber. Hereupon, the amount of the post injection fuel $Q_{F1}$ for releasing NOx is preferably set so that the concentration of $O_2$ in the exhaust gas becomes equal to or smaller than 2 %, and the amount of HC increases.

In the fuel injection control shown in Figs. 11A and 11 B, the pattern of the fuel injection is changed in accordance with the target torque (engine load) and the engine speed (Step S16, S17 or S24). However, instead of that (Step S16, S17 or S24 is deleted), the amount of the post injection fuel may be increased except the full load state while decreasing the increase of the fuel as the engine speed or the engine load becomes higher.

In this case, the changing property of the amount of the post injection fuel in the range from the low load and low rotation state to the high load and high rotation state may be set, for example, as shown by the graph $G_2$ in Fig. 13C. In the fuel injection control shown in Fig. 11A, the changing properties of the amounts of the post injection fuels for the NOx release and the normal state in the range from the low load and low rotation state to the high load and high rotation state may be set as shown by the graphs $G_1$ and $G_3$ in Fig. 13C, respectively.

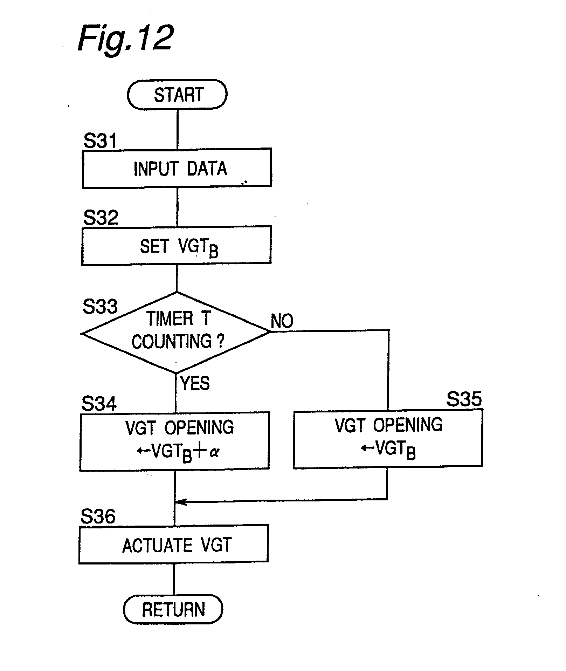

Hereinafter, there will be described a control method of the VGT control in the fuel injection control of the engine, with reference to the flow chart shown in Fig. 12.

As shown in Fig. 12, in this control routine, at first in Step S31, data are input. Following that, in Step S32, a base VGT amount $VGT_B$ is set in correspondence with the engine speed Ne and the target torque Tr.

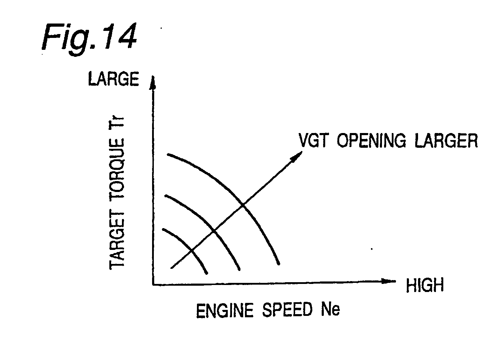

As shown in Fig. 14, the base VGT amount $VGT_B$ is set in such a manner that the higher the output of the engine becomes (higher torque, higher rotation), the larger the VGT opening becomes.

Next, in Step S33, it is judged whether the timer T is continuing to count or not, namely whether the fuel injection control for releasing NOx is being executed or not. Hereupon, the timer T is common with that in the above-mentioned fuel injection control routine shown in Fig. 11A. Thus, if the timer T is continuing to count (YES), namely if NOx is being released, the VGT opening is set to the sum of the base VGT amount $VGT_B$ and a predetermined value a in Step S34. In this case, because the VGT opening becomes larger, the supercharging pressure of the turbo supercharger 25 is lowered so that the fresh air amount (amount of intake air) is reduced. Then, in Step S36, the VGT is actuated.

On the other hand, if it is judged that timer T is not continuing to count in Step S33 (NO), namely if it is the normal state, the VGT opening is merely set to the base VGT amount $VGT_B$ because it is not necessary to reduce the fresh air amount. Then, in Step S36, the VGT is actuated.

Hereupon, in the case that it is judged the timer T is continuing to count in Step S33, the fresh air amount may be reduced by decreasing the opening of the throttle valve 14 or increasing the opening of the EGR valve 24, instead of increasing the VGT opening.

(Second embodiment)

Hereinafter, the second embodiment of the present invention will be described. In the second embodiment, an NOx reducing catalyst is provided in the engine, while the reducing agent (HC, CO) required for purifying NOx by the NOx reducing catalyst is supplied by executing the post injection.

In the second embodiment, the upstream end of the exhaust passage 20 connected to the engine body 1 is branched into sections corresponding to the respective cylinders 2, and the branched sections are connected to the combustion chambers 4 of the respective cylinders 2 via respective exhaust ports. Further, the turbine 21 rotated due to the exhaust gas flow, the exhaust gas purifying apparatus 22 (i.e. NOx purifying catalyst) using the NOx reducing catalyst at least for reducing and purifying NOx in the exhaust gas, and the NOx sensor 19 for detecting the NOx concentration in the exhaust gas passing through the exhaust gas purifying apparatus 22 are arranged in the exhaust gas passage 20 in the sequential order from the upstream side as seen in the exhaust gas flowing direction.

The exhaust gas purifying apparatus 22 using the NOx reducing catalyst is provided with a cordierite catalyst support formed in a honeycomb structure having a lot of small diameter hole portions (through holes) extending in parallel to each other along the exhaust gas flow direction. In the NOx reducing catalyst, two catalytic layers are formed on each of through hole wall surfaces. Concretely, the catalytic layers are formed such that platinum (Pt) and rhodium (Rh) are carried on a catalyst support such as an MFI type zeolite (ZSM5) as a porous material.

Thus, the exhaust gas purifying apparatus 22 (NOx purifying catalyst) purifies NOx in the exhaust gas by causing NOx to react on a reducing agent (reducer) to be reduced, in the case that the gas mixture of air and fuel in the combustion chamber 4 is lean so that the concentration of oxygen in the exhaust gas is high, for example, in the case that the concentration of oxygen is equal to or larger than 4 %. Hereupon, the exhaust gas purifying apparatus 22 (NOx purifying catalyst) has a catalytic function as same as that of a three-way catalyst when the concentration of oxygen is lower.

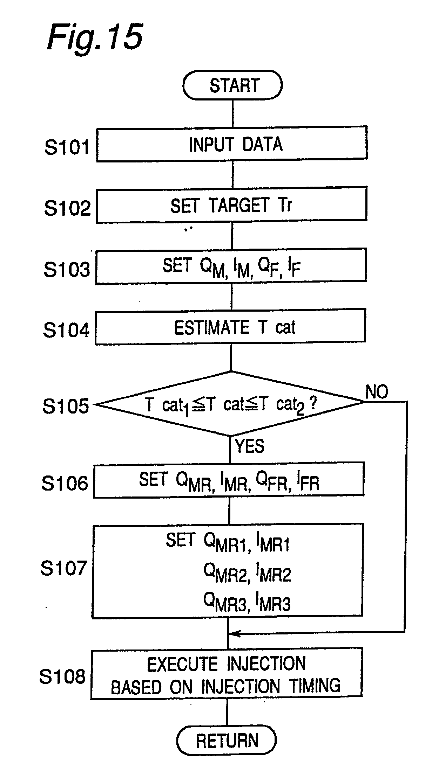

Fig. 15 is a flow chart showing a control operation for controlling the fuel injection according to the second embodiment. In the control operation, at first in Step S101, various kinds of data are input. Then, in Step S102, a target torque Tr is set. The target torque Tr is set, for example, in accordance with a map based on the engine speed and accelerator opening.

Next, in Step S103, the amount of the main injection fuel $Q_m$, the main injection timing $I_m$, the amount of the post injection fuel $Q_F$ and the post injection timing $I_F$ are set as fundamental set values in correspondence with the driving state.

Following that, in Step S104, the catalyst temperature Tcat is estimated. Then, in Step S105, the demand for increasing HC (demand for reducing NOx) is examined by judging whether the catalyst temperature Tcat is in a temperature range ($Tcat_1 \leqq Tcat \leqq Tcat_2$) in which the NOx purifying ratio is high.

Thus, if the judgement in Step S105 is "YES", namely if it is judged that the demand for increasing HC (demand for reducing NOx) is large, the amount of the main injection fuel $Q_{mR}$, the main injection timing $I_{mR}$, the amount of the post injection fuel $Q_{FR}$ and the post injection timing $I_{FR}$ are set in Step S106, each of which has been obtained by correcting the corresponding fundamental set value on the basis of the target torque Tr.

Then, in Step S107, the fuel amounts $Q_{mR1}$-$Q_{mR3}$ and the injection timings $I_{mR1}$-$I_{mR3}$ for the multistage injection are set on the basis of the amount of the main injection fuel $Q_{mR}$ and the main injection timing $I_{mR}$. As for the multistage injection, in the low rotation and/or low torque states, three-stage injection is executed so as to elevate the temperature of the exhaust gas by making the combustion slow. On the other hand, in the high rotation and/or high torque states, two-stage injection is executed. After that, in Step S108, the fuel injection is executed in accordance with the injection timing.

Meanwhile, if the judgement in Step S105 is "NO", namely if it is judged that the demand for increasing HC (demand for reducing NOx) is not large, the operation is simply advanced to Step S108, wherein the fuel injection is executed in accordance with the condition which has been set in Step S103.

(Third embodiment)

Hereinafter, there will be described a diesel engine provided with an NOx trap catalyst according to the third embodiment of the present invention. In this case, the construction of the diesel engine is nearly as same as that of the above-mentioned diesel engine shown in Fig. 1, according to the first embodiment, in which the exhaust gas purifying apparatus (NOx purifying catalyst) disposed in the exhaust passage includes the NOx trap catalyst.

The function of the NOx trap catalyst of the third embodiment is nearly as same as that of the first embodiment. The NOx trap catalyst of the third embodiment has a catalytic material which can reduce and purify NOx in such a rich state that the air fuel ratio of the exhaust gas is nearly equal to or smaller than the theoretical air fuel ratio. Further, the NOx trap catalyst has an NOx absorber which releases NOx in such a rich state (the concentration of oxygen being equal to or lower than 1 %) that the air fuel ratio of the exhaust gas is nearly equal to or smaller than the theoretical air fuel ratio, while absorbing NOx in such a lean state (the concentration of oxygen being equal to or higher than 3 %) that the air fuel ratio of the exhaust gas is larger than the above. Concretely, as the NOx trap catalyst described above, there has been used a catalyst of two-layer coating type in which an inner catalytic layer and an outer catalytic layer are formed on the surface of the wall of a carrier. The inner catalytic layer supports alumina (aluminum oxide) or ceria (cerium oxide) which supports platinum (Pt), and, at least one of a rare earth metal, an alkaline metal and an alkaline earth metal such as barium (Ba) or the like which acts as the NOx absorber. The outer catalytic layer supports zeolite which supports a noble metal such as platinum (Pt) or the like. Hereupon, the construction of the catalyst is not limited to the above mentioned one. It may be used any catalyst having an NOx absorber and a catalytic material, which can reduce and purify NOx in the rich state that the air fuel ratio of the exhaust gas is nearly equal to or smaller than the theoretical air fuel ratio.

In the diesel engine provided with the NOx trap catalyst according to the third embodiment, the reducing agent in the exhaust gas is increased when the driving state is such that the demand for NOx reduction of the NOx trap catalyst is large. If the amount of NOx absorbed by the NOx trap catalyst (NOx trapping amount) is large, the amount of NOx release is large when the air fuel ratio is rich so that the demand for reducing NOx is large. Thus, there is judged whether it is such a driving state that the NOx trapping amount is large, for example, on the basis of the travel distance or travel time. Then, if the NOx trapping amount is large, the post injection timing is retarded in relation to the normal post injection timing at which the combustion of the post injection fuel is started just after the combustion of the main injection fuel has ended. Thus, the start of the combustion of the post injection fuel is retarded in relation to the timing at which the combustion of the main injection fuel ends so that the supply of HC which acts as the reducing agent for the NOx trap catalyst, is much further increased.

In the third embodiment, the post injection timing is set in the manner as same as that of the first or second embodiment. Further, the multistage injection, on the occasion that the post injection timing is retarded, is executed in the manner as same as that of the second embodiment.

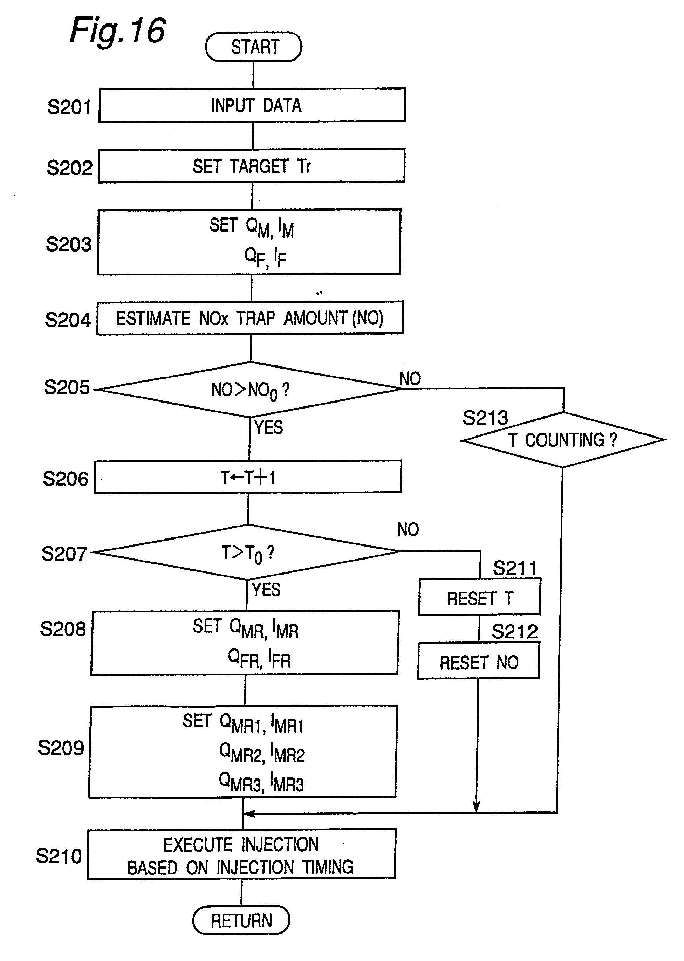

Fig. 16 is a flow chart showing a control operation of the fuel injection according to the third embodiment. In the control operation, at first in Step S201, various kinds of data are input. Then, in Step S202, a target torque Tr of the engine is set. The target torque Tr is set, for example, in accordance with a map based on the engine speed and accelerator opening.

Next, in Step S203, the amount of the main injection fuel $Q_m$, the main injection timing $I_m$, the amount of the post injection fuel $Q_F$ and the post injection timing $I_F$ are set as fundamental set values in correspondence with the driving state.

Following that, in Step S204, the NOx trapping amount NO is estimated on the basis of the travel distance or travel time. Then, in Step S205, the demand for increasing HC (demand for reducing NOx) is examined by judging whether the NOx trapping amount NO is larger than a threshold $NO_0$ or not.

Thus, if the judgement in Step S205 is "YES", namely if it is judged that the demand for increasing HC (demand for reducing NOx) is large, the timer count value T is incremented by 1 in Step S206. Next, in Step S207, it is judged whether the timer count value T is larger than a set value $T_0$ or not.

If the timer count value T is not larger than the set value $T_0$, the amount of the main injection fuel $Q_{mR}$, the main injection timing $I_{mR}$, the amount of the post injection fuel $Q_{FR}$ and the post injection timing $I_{FR}$ are set in Step S208, each of which has been obtained by correcting the corresponding fundamental set value on the basis of the target torque Tr.

Then, in Step S209, the fuel amounts $Q_{mR1}$-$Q_{mR3}$ and the injection timings $I_{mR1}$-$I_{mR3}$ for the multistage injection are set on the basis of the amount of the main injection fuel $Q_{mR}$ and the main injection timing $I_{mR}$. As for the multistage injection, in the low rotation and/or low torque states, three-stage injection is executed so as to elevate the temperature of the exhaust gas by making the combustion slow. On the other hand, in the high rotation and/or high torque states, two-stage injection is executed. After that, in Step S210, the fuel injection is executed in accordance with the injection timing.

On the other hand, if it is judged that the timer count value T is larger than the set value $T_0$ in Step S207, the timer count value T is reset in Step S211. Following that, in Step S212, the estimated value of the NOx trapping amount NO is reset. Then, the operation is advanced to Step S210, wherein the fuel injection is executed in accordance with the condition which has been set in Step S203.

Meanwhile, if the judgement in Step S205 is "NO", namely if it is judged that the demand for increasing HC (demand for reducing NOx) is not large, the operation is advanced through Step S213 (if the time counting is being continued) to Step S210, wherein the fuel injection is executed in accordance with the condition which has been set in Step S203.

(Fourth embodiment)

Hereinafter, there will be described a diesel engine according to the fourth embodiment of the present invention, in which an oxidizing catalyst composed of a catalytic metal having an oxidizing function is provided in the exhaust passage. Further, the diesel engine is provided with a device which judges a deterioration of the oxidizing catalyst when a predetermined monitoring condition is satisfied

In this case also, the construction of the diesel engine is nearly as same as that of the above-mentioned diesel engine shown in Fig. 1, according to the first or second embodiment. However, in the fourth embodiment, the oxidizing catalyst and the NOx purifying catalyst (NOx reducing catalyst) which is as same as that of the second embodiment are sequentially disposed at an upstream position and a downstream position in the exhaust passage.

The oxidizing catalyst is provided with a cordierite catalyst support formed in a honeycomb structure having a lot of hole portions (through holes) extending in parallel to each other along the exhaust gas flow direction (axial direction). In the oxidizing catalyst, a catalytic layer is formed on each of through hole wall surfaces of the catalysts support. The catalytic layer has such a construction that a catalytic powder, in which Pt is supported by alumina and ceria, is supported by the catalytic support using a binder.

In the diesel engine having the oxidizing catalyst, when the predetermined monitoring condition is satisfied, the deterioration of the oxidizing catalyst is judged. The judgement of the deterioration of the oxidizing catalyst is executed in a steady state when the catalyst temperature is low in which the purifying ratio is low. Thus, if the monitoring condition is satisfied, in order to judge the deterioration of the catalyst, HC is increased by executing the post injection. That is, it is judged whether it is the driving state to satisfy the monitoring condition. If the monitoring condition is satisfied, the post injection timing is retarded in relation to the normal post injection timing at which the combustion of the post injection fuel is started just after the combustion of the main injection fuel has ended. Thus, the start of the combustion of the post injection fuel is retarded in relation to the timing at which the combustion of the main injection fuel ends. In consequence, the supply of the reducing agent (HC) may be easily and effectively increased by means of the post injection in correspondence with the demand of increase of HC for judging the deterioration of the oxidizing catalyst.

In the fourth embodiment, the post injection timing is set in the manner as same as that of the first or second embodiment. Further, the multistage injection, on the occasion that the post injection timing is retarded, is executed in the manner as same as that of the second embodiment.

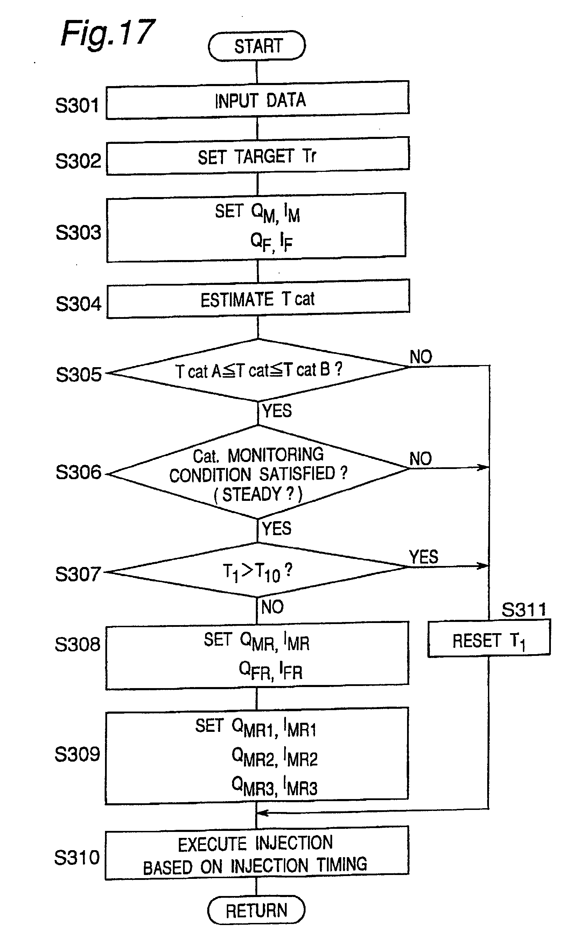

Fig. 17 is a flow chart showing a control operation of the fuel injection according to the fourth embodiment. In the control operation, at first in Step S301, various kinds of data are input. Then, in Step S302, a target torque Tr of the engine is set. The target torque Tr is set, for example, in accordance with a map based on the engine speed and accelerator opening.

Next, in Step S303, the amount of the main injection fuel $Q_m$, the main injection timing $I_m$, the amount of the post injection fuel $Q_F$ and the post injection timing $I_F$ are set as fundamental set values in correspondence with the driving state.

Following that, in Step S304, the catalyst temperature Tcat is estimated. Then, in Step S305, the demand for increasing HC is examined by judging whether the catalyst temperature Tcat is in a temperature range (TcatA$\leqq$Tcat$\leqq$TcatB) which is suitable for judging the deterioration.

Thus, if the judgement in Step S305 is "YES", namely if it is judged that the demand for increasing HC (demand for reducing NOx) is large, it is judged whether the driving state of the engine is steady (the monitoring condition of the deterioration being satisfied) or not in step S306. If it is steady, it is judged whether the timer count value $T_1$ is larger than set value $T_{10}$ or not in step S307.

If the timer count value $T_1$ is not larger than the set value $T_{10}$, the amount of the main injection fuel $Q_{mR}$, the main injection timing $I_{mR}$, the amount of the post injection fuel $Q_{FR}$ and the post injection timing $I_{FR}$ are set in Step S308, each of which has been obtained by correcting the corresponding fundamental set value on the basis of the target torque Tr.

Then, in Step S309, the fuel amounts $Q_{mR1}$-$Q_{mR3}$ and the injection timings $I_{mR1}$-$I_{mR3}$ for the multistage injection are set on the basis of the amount of the main injection fuel $Q_{mR}$ and the main injection timing $I_{mR}$. As for the multistage injection, in the low rotation and/or low torque states, three-stage injection is executed so as to elevate the temperature of the exhaust gas by making the combustion slow. On the other hand, in the high rotation and/or high torque states, two-stage injection is executed. After that, in Step S310, the fuel injection is executed in accordance with the injection timing.

On the other hand, if it is judged that the timer count value $T_1$ is larger than the set value $T_{10}$ in Step S307, the timer count value $T_1$ is reset in Step S311. Then, the operation is advanced to Step S310, wherein the fuel injection is executed in accordance with the condition which has been set in Step S303.

If the judgement in Step S306 is "NO", namely if it is not steady, the timer count value $T_1$ is reset in Step S311. Then, the operation is advanced to Step S310, wherein the fuel injection is executed in accordance with the condition which has been set in Step S303.

Meanwhile, if the judgement in Step S305 is "NO", namely if it is judged that the demand for increasing HC is not large, the timer count value $T_1$ is reset in Step S311. Then, the operation is simply advanced to Step S310, wherein the fuel injection is executed in accordance with the condition which has been set in Step S303.

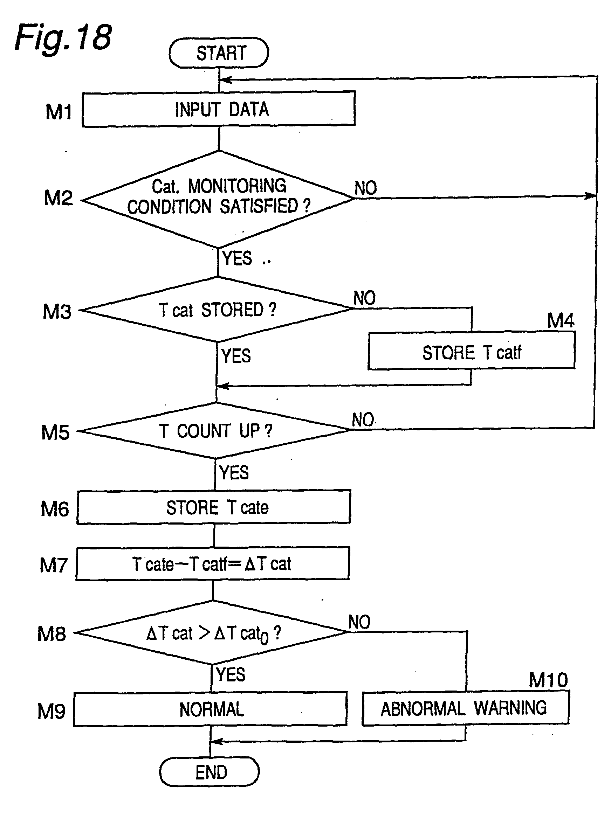

The operation for judging the deterioration of the catalyst is executed in accordance with the flow chart shown in Fig. 18. If this operation is started, various kinds of data are input in Step M1. Following that, in Step M2, it is judged whether the monitoring condition of the catalyst deterioration is satisfied or not.

If the monitoring condition of the catalyst deterioration is satisfied, it is judged whether the catalyst temperature Tcat has been stored (memorized) or not in Step M3. If it has not been stored yet, the catalyst temperature Tcat at the present time is stored as the catalyst temperature Tcatf at the time point that the monitoring operation has just been started, and then the operation is advanced to Step M5. On the other hand, if the catalyst temperature has been already stored, the operation is simply advanced to Step M5.

In Step M5, it is judged whether the timer T has counted up (timed up) or not. Thus, Steps M1-M5 are repeatedly executed till the timer T has counted up. If the timer T has counted up, the catalyst temperature Tcate at the present time is stored in Step M6. Then, in Step M7, the catalyst temperature difference $\Delta$ Tcat (Tcate-Tcatf= $\Delta$ Tcat) is calculated.

After that, in Step M8, it is judged whether the catalyst temperature difference $\Delta$ Tcat is larger than a predetermined set value $\Delta$ Tcat$_0$ or not. If the catalyst temperature difference $\Delta$ Tcat is larger than the set value $\Delta$ Tcat$_0$, a judgement indicating normality is output in Step M9. On the other hand, if the catalyst temperature difference $\Delta$ Tcat is not larger than the set value $\Delta$ Tcat$_0$, a warning indicating abnormality is output in Step M10.

As described above, according to the present invention, in the diesel engine having the fuel injector for directly injecting the fuel into the combustion chamber, wherein the main injection is executed in the predetermined period before about the top dead center of the compression stroke, while the post injection is executed on the basis of the timing that the combustion of the main injection fuel ends so that the combustion of the post injection fuel is started just after the combustion of the main injection fuel has ended, HC may be easily and effectively increased in correspondence with the demand for increasing HC, in the case that the NOx reducing catalyst or NOx trap catalyst is provided in the exhaust passage, or in the case that the deterioration of the oxidizing catalyst is judged.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

**Claims**

1. An apparatus for purifying an exhaust gas of diesel engine comprising:

   a fuel injector (5) for injecting a fuel into a combustion chamber (4),
   a main injection device (40) for executing a main injection by causing said fuel injector (5) to inject the fuel near a top dead center of a compression stroke;
   a post injection device (41) for executing a post injection by causing said fuel injector (5) to inject the fuel on the basis of a timing at which a combustion of the fuel injected by the main injection ends within a predetermined period in an expansion stroke after the main injection has been executed; and
   an NOx absorber (22) which absorbs NOx under an atmosphere with an excess oxygen while releasing the absorbed NOx when a concentration of oxygen is lowered, said NOx absorber (22) being disposed in an exhaust passage (20), **characterized in that**

   said post injection device (41) executes the post injection when the absorbed NOx is released from said NOx absorber (22).

2. The exhaust gas purifying apparatus of the diesel engine according to claim 1, **characterized in that** said post injection device (41) executes the post injection while setting an injection amount thereof to a value equal to or larger than a predetermined value so as to increase HC.

3. The exhaust gas purifying apparatus of the diesel engine according to claim 2, **characterized in that** the ratio of the amount of the fuel injected by the post injection to the sum of the amount of the fuel injected by the main injection and the amount of the fuel injected by the post injection is equal to or larger than 20%.

4. The exhaust gas purifying apparatus of the diesel engine according to any one of claims 1 to 3, **characterized in that** the post injection device (41) executes the post injection for releasing the NOx from said NOx absorber (22) in such a driving state that an engine speed is equal to or smaller than a predetermined speed and an engine load is equal to or smaller than a predetermined load.

5. The exhaust gas purifying apparatus of the diesel engine according to any one of claims 1 to 4, **characterized in that** said apparatus further comprises a fresh air reducing device which reduces a fresh air amount when the NOx is released.

6. The exhaust gas purifying apparatus of the diesel engine according to claim 5, **characterized in that** said diesel engine is provided with a turbo supercharger (25) in which a supercharging pressure is adjustable, wherein said fresh air reducing device reduces the fresh air amount by causing said turbo supercharger to reduce the supercharging pressure.

7. A method for purifying an exhaust gas for a diesel engine having a fuel injector (5) for injecting a fuel into a combustion chamber (4), and an NOx absorber (22) disposed in an exhaust passage (20) which absorbs NOx under an atmosphere with an excess oxygen while releasing the absorbed NOx when a concentration of oxygen is lowered, wherein a main injection is executed by causing said fuel injector (5) to inject the fuel near a top dead center of a compression stroke, **characterized in that** said method comprises the steps of:

   setting a timing at which a combustion of the fuel injected by the main injection ends in an expansion stroke; and
   executing a post injection by causing said fuel injector (5) to inject the fuel on the basis of the timing which has been set in said setting step, when the NOx is released from said NOx absorber.

8. A method of injecting a fuel for a diesel engine having a fuel injector (5) for directly injecting a fuel into a combustion chamber (4), wherein a main injection is executed by causing said fuel injector (5) to inject the fuel in a predetermined period from an intake stroke to a top dead center of a compression stroke, while a post injection is executed by causing said fuel injector (5) to inject the fuel in a predetermined period in a former half of the expansion stroke after the main injection on the basis of a timing at which a combustion of the fuel injected by the main injection ends, **characterized in that** said method comprises the steps of:

setting a condition for increasing a reducing agent in an exhaust gas on the basis of a driving state of the diesel engine;
judging whether said condition is satisfied or not; and
executing the post injection when said condition is satisfied.

9. The method of injecting the fuel for the diesel engine according to claim 8, **characterized in that**
the post injection is executed in such a period that the combustion of the fuel injected by the post injection is started just after the combustion of the fuel injected by the main injection has ended, wherein
when said condition is satisfied, the period of the post injection is retarded in relation to said normal period of the post injection so that the combustion of the fuel injected by the post injection is retarded in relation to the period that the combustion of the fuel injected by the main injection ends.

10. The method of injecting the fuel for the diesel engine according to claim 8 or 9, **characterized in that**
when said condition is satisfied, the period of the post injection is retarded by about 10° of crank angle in relation to said normal period of the post injection.

11. The method of injecting the fuel for the diesel engine according to claim 8 to 10, **characterized in that**
a fuel amount of the post injection is equal to or larger than 15 % of a fuel amount of the main injection.

12. The method of injecting the fuel for the diesel engine according to claim 8 to 11, **characterized in that**
when said condition is satisfied, the period of the post injection is retarded in such a state that at least one of an engine speed and an engine load is low.

13. The method of injecting the fuel for the diesel engine according to claim 8 to 12, **characterized in that**
on the occasion that the period of the post injection is retarded when the condition is satisfied, the main injection is divided into a plurality of divisional injections, wherein
an interval between a closing timing of said fuel injector and a next opening timing of the fuel injector is set to 0.5-1.0 ms.

14. The method of injecting the fuel for the diesel engine according to claim 8 to 13, **characterized in that**
said diesel engine is provided with an NOx reducing catalyst disposed in an exhaust passage, in which a catalytic metal is supported by zeolite, said NOx reducing catalyst having a function for reducing and purifying NOx when an air fuel ratio of the exhaust gas is leaner than a theoretical air fuel ratio, wherein
a reducing agent in the exhaust gas is increased, when the driving state is such that a demand for NOx reduction of said NOx reducing catalyst is large.

15. The method of injecting the fuel for the diesel engine according to claim 8 to 14, **characterized in that**
said diesel engine is provided with an NOx trap catalyst disposed in an exhaust passage, which has a catalytic material for reducing and purifying NOx when an air fuel ratio of the exhaust gas is nearly equal to or richer than a theoretical air fuel ratio, and an NOx absorber which releases the NOx when the air fuel ratio is nearly equal to or richer than the theoretical air fuel ratio while absorbing the NOx when the air fuel ratio is leaner than the theoretical air fuel ratio, wherein
a reducing agent in the exhaust gas is increased when the driving state is such that a demand for NOx reduction of said NOx trap catalyst is large.

16. The method of injecting the fuel for the diesel engine according to claim 8 to 15, **characterized in that**
said diesel engine is provided with an oxidizing catalyst disposed in an exhaust passage, which includes a catalytic metal having an oxidizing function, and a device which judges a deterioration of said oxidizing catalyst when a predetermined monitoring condition is satisfied, wherein
a reducing agent in the exhaust gas is increased when the driving state is such that the condition for judging the deterioration of the oxidizing catalyst is satisfied.

Fig.1

EP 1 245 817 A2

# Fig.2

```
        ┌─────────────┐
        │    START    │
        └─────────────┘
               │
               │                      S1
        ┌─────────────────────┐
        │     INPUT DATA      │
        └─────────────────────┘
               │
               │                      S2
        ┌─────────────────────┐
        │    SET $Q_M$, $I_M$  │
        └─────────────────────┘
               │
               │                      S3
             ╱─────────────╲
        NO  ╱  STEADY STATE ?╲
      ◄────╲                 ╱
             ╲─────────────╱
               │ YES
               │                      S4
             ╱───────────────╲
            ╱ ACTIVATING STATE ?╲  YES
            ╲                   ╱────────┐
             ╲───────────────╱          │
               │ NO                     │ S5
               │              ╱─────────────────╲
               │◄────────────╱  ≧ MIDDLE LOAD ?  ╲
               │    YES       ╲                  ╱
               │               ╲─────────────────╱
               │                     │ NO
               │                     │           S6
               │              ╱──────────────────╲
               │◄────────────╱  ≧ MIDDLE ROTATION ╲
               │    YES       ╲         ?         ╱
               │               ╲──────────────────╱
               │                     │ NO
               │      S7             │
        ┌─────────────────────┐     │
        │    SET $Q_F$, $I_F$  │     │
        └─────────────────────┘     │
               │◄───────────────────┘
               │                      S8
    ┌───────────────────────────┐
    │ EXECUTE INJECTION CONTROL │
    └───────────────────────────┘
               │
        ┌─────────────┐
        │   RETURN    │
        └─────────────┘
```

**Fig.3A**

NEEDLE LIFT

0

HEAT GENERATION RATE

$A_1$ (HEAT BY F/UP)

0

$\tau_{main}$  $\tau_F$  $t_1$  TIME

**Fig.3B**

NEEDLE LIFT

0

HEAT GENERATION RATE

Y

K

$A_2$ (HEAT BY F/UP)

0

$\tau_{main}$  $\tau_F$  $t_1$  TIME

**Fig.3C**

NEEDLE LIFT

0

Y

K

HEAT GENERATION RATE

$A_3$ (HEAT BY F/UP)

0

$\tau_{main}$  $\tau_F$  $t_1$  TIME

*Fig.4A*

*Fig.4B*

*Fig.4C*

25

EP 1 245 817 A2

Fig.5A

Fig.5B

Fig.5C

Fig.6A

FUEL CONSUMPTION RATE

POST INJ. TIMING [°CA]

Fig.6B

FUEL CONSUMPTION RATE

POST INJ. TIMING [°CA]

Fig.6C

FUEL CONSUMPTION RATE

POST INJ. TIMING [°CA]

Fig.7A

Fig.7B

Fig.7C

*Fig.8A*

*Fig.8B*

*Fig.8C*

Fig.9A

AMOUNT OF HC

POST INJ. RATE [%]

Fig.9B

AMOUNT OF HC

POST INJ. RATE [%]

Fig.9C

AMOUNT OF HC

POST INJ. RATE [%]

Fig.10A

Fig.10B

Fig.10C

## Fig.11A

START

S11
INPUT DATA

S12
SET TARGET TORQUE Tr

S13
ESTIMATE NOx ABSORPTION

S14
NOx AMOUNT > $NOx_0$ ? — NO

YES ← YES

S15
TIMER T COUNTING ? — NO

S16
$Ne < Ne_0$ ? — NO

YES

S17
$Tr < Tr_0$ ? YES / NO

S18
$T \leftarrow T + 1$

S19
$T < T_0$ ? — NO

YES

S22
RESET NOx ESTIMATE AND TIMER T

S20
SET $Q_{M1}$, $I_M$, $Q_{F1}$ AND $I_F$

S23
SET $Q_{M2}$, $I_M$, $Q_{F2}$ AND $I_F$

S21
EXECUTE INJECTION

RETURN

## Fig.11B

FROM STEP S14, S15

S24
$Ne < Ne_0$
$Tr < Tr_0$ ? — NO

YES

TO STEP S18     TO STEP S23

## Fig.12

```
              ┌─────────────┐
              │    START    │
              └─────────────┘
                     │
  S31    ┌──────────────────────┐
         │      INPUT DATA       │
         └──────────────────────┘
                     │
  S32    ┌──────────────────────┐
         │      SET VGT_B        │
         └──────────────────────┘
                     │
  S33          ╱──────────╲        NO
            ╱   TIMER T      ╲──────────────┐
            ╲  COUNTING ?    ╱               │
              ╲──────────╱                   │
                   │ YES                     │
  S34   ┌──────────────────────┐   S35  ┌──────────────────────┐
        │    VGT OPENING        │       │    VGT OPENING        │
        │   ←VGT_B+α            │       │   ←VGT_B             │
        └──────────────────────┘       └──────────────────────┘
                   │                             │
                   │◄────────────────────────────┘
  S36   ┌──────────────────────┐
        │     ACTUATE VGT       │
        └──────────────────────┘
                   │
           ┌─────────────┐
           │   RETURN    │
           └─────────────┘
```

$S34$: VGT OPENING $\leftarrow VGT_B + \alpha$

$S35$: VGT OPENING $\leftarrow VGT_B$

Fig.13A

Fig.13B

Fig.13C

## Fig.14

LARGE ↑

TARGET TORQUE Tr

VGT OPENING LARGER

HIGH →

ENGINE SPEED Ne

## Fig.15

```
              ┌─────────────┐
              │   START     │
              └──────┬──────┘
                     │
S101    ┌────────────────────────────┐
        │        INPUT DATA          │
        └────────────┬───────────────┘
                     │
S102    ┌────────────────────────────┐
        │       SET TARGET Tr         │
        └────────────┬───────────────┘
                     │
S103    ┌────────────────────────────┐
        │   SET Q_M, I_M, Q_F, I_F    │
        └────────────┬───────────────┘
                     │
S104    ┌────────────────────────────┐
        │       ESTIMATE T cat        │
        └────────────┬───────────────┘
                     │
S105        ╱────────────────────────╲        NO
          ╱  T cat_1 ≦ T cat ≦ T cat_2 ? ╲──────┐
           ╲────────────────────────╱          │
                     │ YES                      │
S106    ┌────────────────────────────┐          │
        │  SET Q_MR, I_MR, Q_FR, I_FR │          │
        └────────────┬───────────────┘          │
                     │                          │
S107    ┌────────────────────────────┐          │
        │      SET Q_MR1, I_MR1        │          │
        │         Q_MR2, I_MR2         │          │
        │         Q_MR3, I_MR3         │          │
        └────────────┬───────────────┘          │
                     │◄─────────────────────────┘
S108    ┌────────────────────────────┐
        │     EXECUTE INJECTION        │
        │ BASED ON INJECTION TIMING    │
        └────────────┬───────────────┘
                     │
              ┌─────────────┐
              │   RETURN    │
              └─────────────┘
```

## Fig.16

START

S201 | INPUT DATA

S202 | SET TARGET Tr

S203 | SET $Q_M$, $I_M$
$Q_F$, $I_F$

S204 | ESTIMATE NOx TRAP AMOUNT (NO)

S205 — NO > $NO_0$ ?  — NO

YES

S206 | $T \leftarrow T + 1$

S207 — T > $T_0$ ?  — NO

YES

S208 | SET $Q_{MR}$, $I_{MR}$
$Q_{FR}$, $I_{FR}$

S209 | SET $Q_{MR1}$, $I_{MR1}$
$Q_{MR2}$, $I_{MR2}$
$Q_{MR3}$, $I_{MR3}$

S213 — T COUNTING ?

S211 | RESET T

S212 | RESET NO

S210 | EXECUTE INJECTION
BASED ON INJECTION TIMING

RETURN

## Fig.17

```
          ( START )
            |
S301  [ INPUT DATA ]
            |
S302  [ SET TARGET Tr ]
            |
S303  [ SET Q_M, I_M
         Q_F, I_F ]
            |
S304  [ ESTIMATE T cat ]
            |
S305  < T cat A ≦ T cat ≦ T cat B ? >  ──NO──┐
            | YES                             |
S306  < Cat. MONITORING                       |
        CONDITION SATISFIED ?  ──NO──────────>|
        ( STEADY ? ) >                        |
            | YES                             |
S307  < T_1 > T_10 ?  ──YES──────────────────>|
            | NO                        S311  |
S308  [ SET Q_MR, I_MR              [ RESET T_1 ]
         Q_FR, I_FR ]                          |
            |                                  |
S309  [ SET Q_MR1, I_MR1                       |
         Q_MR2, I_MR2                          |
         Q_MR3, I_MR3 ]                        |
            |<─────────────────────────────────┘
S310  [ EXECUTE INJECTION
        BASED ON INJECTION TIMING ]
            |
          ( RETURN )
```

*Fig.18*

START

M1 INPUT DATA

M2 Cat. MONITORING CONDITION SATISFIED ? — NO →

YES ..

M3 T cat STORED ? — NO →

M4 STORE T catf

YES

M5 T COUNT UP ? — NO·

YES

M6 STORE T cate

M7 $T\,cate - T\,catf = \Delta T\,cat$

M8 $\Delta T\,cat > \Delta T\,cat_0$ ? — NO →

YES

M9 NORMAL

M10 ABNORMAL WARNING

END